# EUROPEAN PATENT SPECIFICATION

(11) **EP 3 874 645 B1**
(45) Date of publication and mention of the grant of the patent: **24.05.2023**
(21) Application number: 19801990.3
(22) Date of filing: 30.10.2019
(51) Int. Cl.: H04L 1/18, H04L 1/16

(54) **RETRANSMISSION SCHEMES AND OPTIMIZATIONS FOR PRECONFIGURED UPLINK RESOURCES**
RÜCKÜBERTRAGUNGSSCHEMATA UND OPTIMIERUNGEN FÜR VORKONFIGURIERTE UPLINK-RESSOURCEN
SYSTÈMES DE RETRANSMISSION ET OPTIMISATIONS POUR DES RESSOURCES DE LIAISON MONTANTE PRÉCONFIGURÉES

(30) Priority: 31.10.2018 US 201862753330 P
(43) Date of publication of application: 08.09.2021
(73) Proprietor: TELEFONAKTIEBOLAGET LM ERICSSON (PUBL), 164 83 Stockholm (SE)
(72) Inventor: TIRRONEN, Tuomas, 00950 HELSINKI (FI); SUI, Yutao, 171 67 SOLNA (SE); KADAN VEEDU, Sandeep Narayanan, 183 70 Täby (SE); MEDINA ACOSTA, Gerardo Agni, 195 56 MÄRSTA (SE); LIBERG, Olof, 118 49 STOCKHOLM (SE); BERGMAN, Johan, 112 27 STOCKHOLM (SE); HÖGLUND, Andreas, 170 62 SOLNA (SE)
(74) Representative: Zacco Sweden AB
(86) International application number: PCT/SE2019/051081
(87) International publication number: WO 2020/091676

(56) References cited:
- SIERRA WIRELESS: "NB-IOT Pre-configured UL Resources Design Considerations", 3GPP DRAFT; R1-1810490 NB PUR, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Chengdu, China; 20181008 - 20181012 28 September 2018 (2018-09-28), XP051517898, Retrieved from the Internet: URL:http://www.3gpp.org/ftp/tsg%5Fran/WG1% 5FRL1/TSGR1%5F94b/Docs/R1%2D1810490%2Ezip [retrieved on 2018-09-28]
- HUAWEI ET AL: "Feature lead summary of Support for transmission in preconfigured UL resources", 3GPP DRAFT; R1-1811697 FEATURE LEAD SUMMARY ON SUPPORT FOR TRANSMISSION IN PRECONFIGURED UL RESOURCES, 3RD GENERATION PARTNERSHIP PROJECT (3GPP), MOBILE COMPETENCE CENTRE ; 650, ROUTE DES LUCIOLES ; F , vol. RAN WG1, no. Chengdu, China; 20181008 - 20181012 9 October 2018 (2018-10-09), XP051519086, Retrieved from the Internet: URL:http://www.3gpp.org/ftp/tsg%5Fran/WG1% 5FRL1/TSGR1%5F94b/Docs/R1%2D1811697%2Ezip [retrieved on 2018-10-09]
- SIERRA WIRELESS: "LTE-M Preconfigured UL Resources Summary RAN1 #94-bis", 3GPP DRAFT; R1-1810491 PUR SUMMARY, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Chengdu, China; 20181008 - 20181012 9 October 2018 (2018-10-09), XP051517899, Retrieved from the Internet: URL:http://www.3gpp.org/ftp/tsg%5Fran/WG1% 5FRL1/TSGR1%5F94b/Docs/R1%2D1810491%2Ezip [retrieved on 2018-10-09]

## Description

### TECHNICAL FIELD

The present invention generally relates to wireless communication networks, and particularly relates to improvements in operation of very-low-power devices in a wireless communication network.

### BACKGROUND

Generally, all terms used herein are to be interpreted according to their ordinary meaning in the relevant technical field, unless a different meaning is clearly given and/or is implied from the context in which it is used. All references to alan/the element, apparatus, component, means, step, *etc.* are to be interpreted openly as referring to at least one instance of the element, apparatus, component, means, step, *etc.,* unless explicitly stated otherwise. The steps of any methods disclosed herein do not have to be performed in the exact order disclosed, unless a step is explicitly described as following or preceding another step and/or where it is implicit that a step must follow or precede another step. Any feature of any of the embodiments disclosed herein may be applied to any other embodiment, wherever appropriate. Likewise, any advantage of any of the embodiments may apply to any other embodiments, and vice versa. Other objectives, features, and advantages of the enclosed embodiments will be apparent from the following description.

Long Term Evolution (LTE) is an umbrella term for so-called fourth generation (4G) radio access technologies developed within the Third-Generation Partnership Project (3GPP) and initially standardized in Release 8 (Rel-8) and Release 9 (Rel-9), also known as Evolved UTRAN (E-UTRAN). LTE is targeted at various licensed frequency bands and is accompanied by improvements to non-radio aspects commonly referred to as System Architecture Evolution (SAE), which includes Evolved Packet Core (EPC) network. LTE continues to evolve through subsequent releases. One of the features of Release 11 is an enhanced Physical Downlink Control Channel (ePDCCH), which has the goals of increasing capacity and improving spatial reuse of control channel resources, improving inter-cell interference coordination (ICIC), and supporting antenna beamforming and/or transmit diversity for control channel.

Existing methods are disclosed in SIERRA WIRELESS: "NB-IOT Pre-configured UL Resources Design Considerations",3GPP DRAFT; R1-1810490 (2018-09-28), HUAWEI ET AL: "Feature lead summary of Support for transmission in preconfigured UL resources", 3GPP DRAFT; R1-1811697 (2018-10-09), and SIERRA WIRELESS: "LTE-M Preconfigured UL Resources Summary RAN1 #94-bis", 3GPP DRAFT; R1-1810491 (2018-10-09).

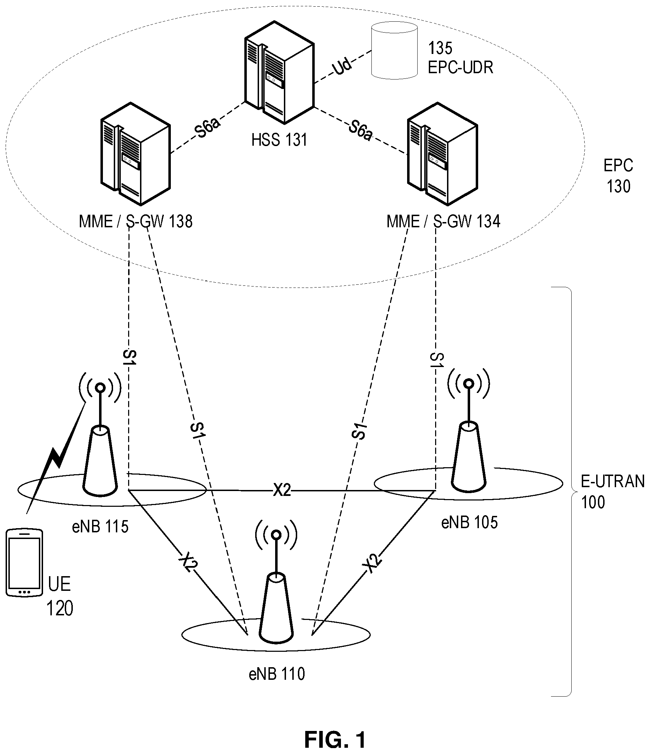

An overall exemplary architecture of a network comprising LTE and SAE is shown in Figure 1. E-UTRAN 100 comprises one or more evolved Node B's (eNB), such as eNBs 105, 110, and 115, and one or more user equipment (UE), such as UE 120. As used within 3GPP specifications, "user equipment" (or "UE") can refer to any wireless communication device (e.g., smartphone or computing device) that is capable of communicating with 3GPPstandard-compliant network equipment, including E-UTRAN and earlier-generation RANs (e.g., UTRAN/"3G" and/or GERAN/"2G") as well as later-generation RANs in some cases.

As specified by 3GPP, E-UTRAN 100 is responsible for all radio-related functions in the network, including radio bearer control, radio admission control, radio mobility control, scheduling, and dynamic allocation of resources to UEs in uplink (UL) and downlink (DL), as well as security of the communications with the UE. These functions reside in the eNBs, such as eNBs 105, 110, and 115, which communicate with each other via an X1 interface. The eNBs also are responsible for the E-UTRAN interface to EPC 130, specifically the S1 interface to the Mobility Management Entity (MME) and the Serving Gateway (SGW), shown collectively as MME/S-GWs 134 and 138 in Figure 1.

In general, the MME/S-GW handles both the overall control of the UE and data flow between UEs (such as UE 120) and the rest of the EPC. More specifically, the MME processes the signaling (e.g., control plane, CP) protocols between UEs and EPC 130, which are known as the Non-Access Stratum (NAS) protocols. The S-GW handles all Internet Protocol (IP) data packets (e.g., user plane, UP) between UEs and EPC 130, and serves as the local mobility anchor for the data bearers when a UE moves between eNBs, such as eNBs 105, 110, and 115.

EPC 130 can also include a Home Subscriber Server (HSS) 131, which manages userand subscriber-related information. HSS 131 can also provide support functions in mobility management, call and session setup, user authentication and access authorization. The functions of HSS 131 can be related to the functions of legacy Home Location Register (HLR) and Authentication Centre (AuC) functions or operations.

In some embodiments, HSS 131 can communicate with a user data repository (UDR) - labelled EPC-UDR 135 in Figure 1 - via a Ud interface. The EPC-UDR 135 can store user credentials after they have been encrypted by AuC algorithms. These algorithms are not standardized (i.e., vendor-specific), such that encrypted credentials stored in EPC-UDR 135 are inaccessible by any other vendor than the vendor of HSS 131.

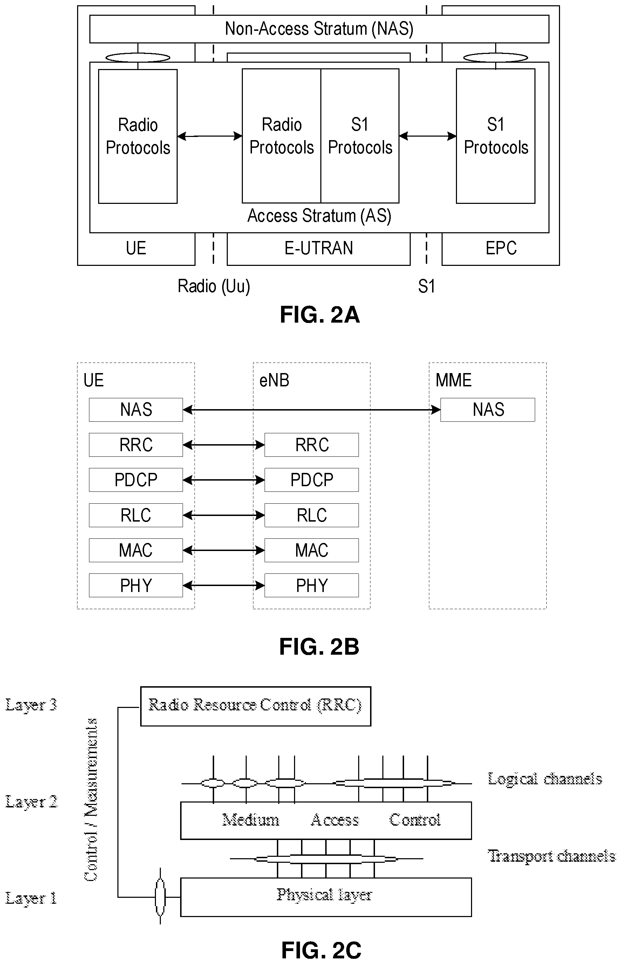

Figure 2A shows a high-level block diagram of an exemplary LTE architecture in terms of its constituent entities - UE, E-UTRAN, and EPC - and high-level functional division into the Access Stratum (AS) and the Non-Access Stratum (NAS). Figure 2A also illustrates two particular interface points, namely Uu (UE/E-UTRAN Radio Interface) and S 1 (E-UTRAN/EPC interface), each using a specific set of protocols, *i.e*., Radio Protocols and S1 Protocols. Each of the two protocols can be further segmented into user plane (or "U-plane") and control plane (or "C-plane") protocol functionality. On the Uu interface, the U-plane carries user information (e.g., data packets) while the C-plane is carries control information between UE and E-UTRAN.

Figure 2B illustrates a block diagram of an exemplary C-plane protocol stack on the Uu interface comprising Physical (PHY), Medium Access Control (MAC), Radio Link Control (RLC), Packet Data Convergence Protocol (PDCP), and Radio Resource Control (RRC) layers. The PHY layer is concerned with how and what characteristics are used to transfer data over transport channels on the LTE radio interface. The MAC layer provides data transfer services on logical channels, maps logical channels to PHY transport channels, and reallocates PHY resources to support these services. The RLC layer provides error detection and/or correction, concatenation, segmentation, and reassembly, reordering of data transferred to or from the upper layers. The PHY, MAC, and RLC layers perform identical functions for both the U-plane and the C-plane. The PDCP layer provides ciphering/deciphering and integrity protection for both U-plane and C-plane, as well as other functions for the U-plane such as header compression.

Figure 2C shows a block diagram of an exemplary LTE radio interface protocol architecture from the perspective of the PHY. The interfaces between the various layers are provided by Service Access Points (SAPs), indicated by the ovals in Figure 2C. The PHY layer interfaces with the MAC and RRC protocol layers described above. The MAC provides different logical channels to the RLC protocol layer (also described above), characterized by the type of information transferred, whereas the PHY provides a transport channel to the MAC, characterized by how the information is transferred over the radio interface. In providing this transport service, the PHY performs various functions including error detection and correction; rate-matching and mapping of the coded transport channel onto physical channels; power weighting, modulation; and demodulation of physical channels; transmit diversity, beamforming multiple input multiple output (MIMO) antenna processing; and providing radio measurements to higher layers, such as RRC.

Generally speaking, a physical channel corresponds a set of resource elements carrying information that originates from higher layers. Downlink (*i.e*., eNB to UE) physical channels provided by the LTE PHY include Physical Downlink Shared Channel (PDSCH), Physical Multicast Channel (PMCH), Physical Downlink Control Channel (PDCCH), Relay Physical Downlink Control Channel (R-PDCCH), Physical Broadcast Channel (PBCH), Physical Control Format Indicator Channel (PCFICH), and Physical Hybrid ARQ Indicator Channel (PHICH). In addition, the LTE PHY downlink includes various reference signals, synchronization signals, and discovery signals.

PDSCH is the main physical channel used for unicast downlink data transmission, but also for transmission of RAR (random access response), certain system information blocks, and paging information. PBCH carries the basic system information, required by the UE to access the network. PDCCH is used for transmitting downlink control information (DCI) that carries scheduling information for DL messages on PDSCH, and grants for UL transmission on PUSCH.

Uplink (*i.e*., UE to eNB) physical channels provided by the LTE PHY include Physical Uplink Shared Channel (PUSCH), Physical Uplink Control Channel (PUCCH), and Physical Random Access Channel (PRACH). In addition, the LTE PHY uplink includes various reference signals including demodulation reference signals (DM-RS), which are transmitted to aid the eNB in the reception of an associated PUCCH or PUSCH; and sounding reference signals (SRS), which are not associated with any uplink channel.

PUSCH is the uplink counterpart to the PDSCH. PUCCH is used by UEs to transmit uplink control information, including HARQ acknowledgements, channel state information reports, etc. PRACH is used for random access preamble transmission.

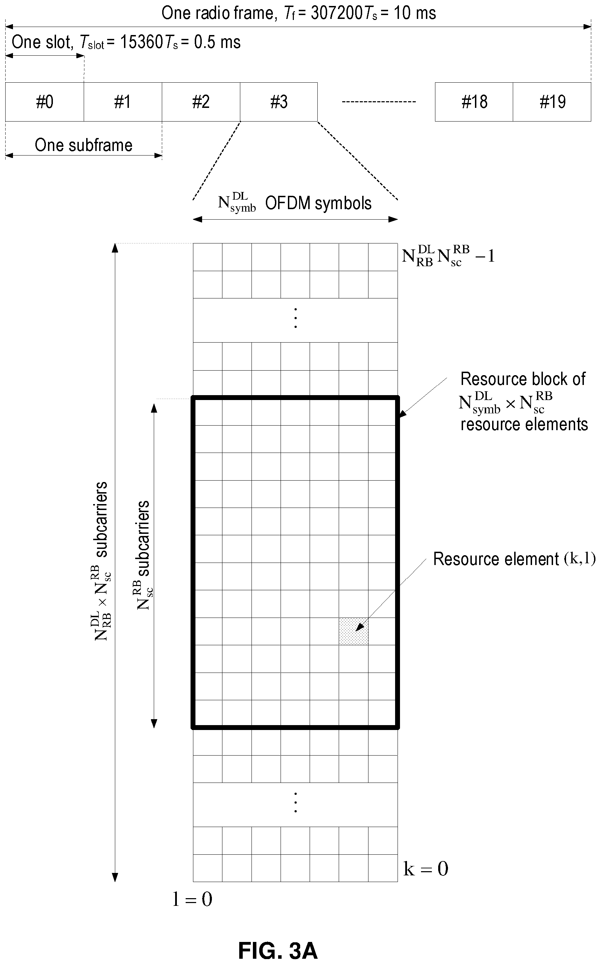

The multiple access scheme for the LTE PHY is based on Orthogonal Frequency Division Multiplexing (OFDM) with a cyclic prefix (CP) in the downlink, and on Single-Carrier Frequency Division Multiple Access (SC-FDMA) with a cyclic prefix in the uplink. To support transmission in paired and unpaired spectrum, the LTE PHY supports both Frequency Division Duplexing (FDD) (including both full- and half-duplex operation) and Time Division Duplexing (TDD). Figure 3A shows an exemplary radio frame structure ("type 1") used for LTE FDD downlink (DL) operation. The DL radio frame has a fixed duration of 10 ms and consists of 20 slots, labeled 0 through 19, each with a fixed duration of 0.5 ms. A 1-ms subframe comprises two consecutive slots where subframe i consists of slots 2i and 2*i*+1. Each exemplary FDD DL slot consists of N^{DL}_{symb} OFDM symbols, each of which is comprised of N_{sc} OFDM subcarriers. Exemplary values of N^{DL}_{symb} can be 7 (with a normal CP) or 6 (with an extended-length CP) for subcarrier spacing (SCS) of 15 kHz. The value of N_{sc} is configurable based upon the available channel bandwidth. Since persons of ordinary skill in the art are familiar with the principles of OFDM, further details are omitted in this description.

As shown in Figure 3A, a combination of a particular subcarrier in a particular symbol is known as a resource element (RE). Each RE is used to transmit a particular number of bits, depending on the type of modulation and/or bit-mapping constellation used for that RE. For example, some REs may carry two bits using QPSK modulation, while other REs may carry four or six bits using 16- or 64-QAM, respectively. The radio resources of the LTE PHY are also defined in terms of physical resource blocks (PRBs). A PRB spans N^{RB}_{sc} sub-carriers over the duration of a slot (*i.e*., N^{DL}_{symb} symbols), where N^{RB}_{sc} is typically either 12 (with a 15-kHz sub-carrier bandwidth) or 24 (7.5-kHz bandwidth). A PRB spanning the same N^{RB}_{sc} subcarriers during an entire subframe (i.e., 2N^{DL}_{symb} symbols) is known as a PRB pair. Accordingly, the resources available in a subframe of the LTE PHY DL comprise N^{DL}_{RB} PRB pairs, each of which comprises 2N^{DL}_{symb}• N^{RB}_{sc} REs. For a normal CP and 15-KHz SCS, a PRB pair comprises 168 REs.

One exemplary characteristic of PRBs is that consecutively numbered PRBs (e.g., PRBᵢ and PRBi+i) comprise consecutive blocks of subcarriers. For example, with a normal CP and 15-KHz sub-carrier bandwidth, PRB₀ comprises sub-carrier 0 through 11 while PRB₁ comprises sub-carriers 12 through 23. The LTE PHY resource also can be defined in terms of virtual resource blocks (VRBs), which are the same size as PRBs but may be of either a localized or a distributed type. Localized VRBs can be mapped directly to PRBs such that VRB *n*_{VRB} corresponds to PRB *n*_{PRB} = *n*_{VRB}. On the other hand, distributed VRBs may be mapped to non-consecutive PRBs according to various rules, as described in 3GPP Technical Specification (TS) 36.213 or otherwise known to persons of ordinary skill in the art. However, the term "PRB" shall be used in this disclosure to refer to both physical and virtual resource blocks. Moreover, the term "PRB" will be used henceforth to refer to a resource block for the duration of a subframe, *i.e.,* a PRB pair, unless otherwise specified.

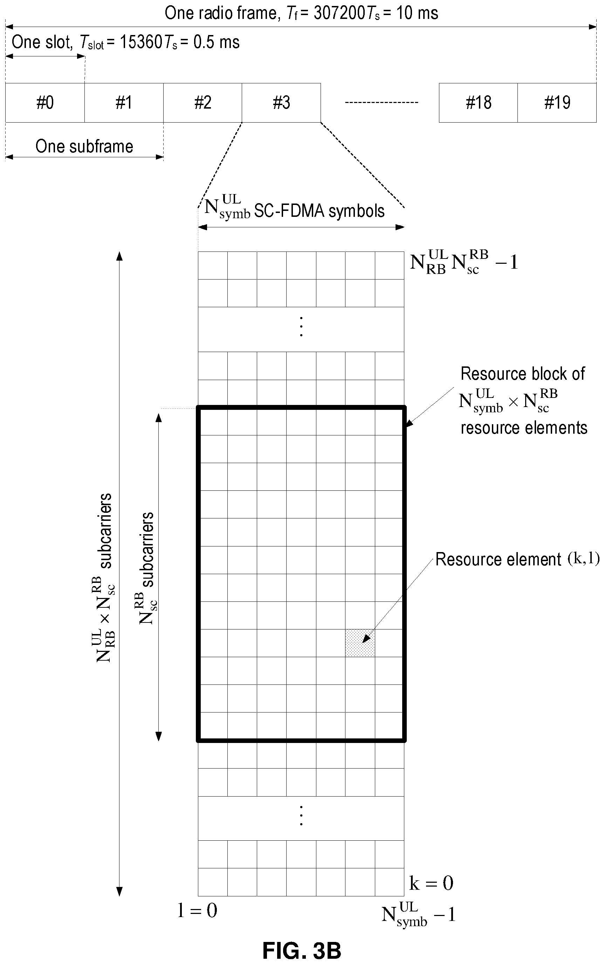

Figure 3B shows an exemplary LTE FDD uplink (UL) radio frame configured in a similar manner as the exemplary FDD DL radio frame shown in Figure 3A. Using terminology consistent with the above DL description, each UL slot consists of N^{UL}_{symb} OFDM symbols, each of which is comprised of N_{sc} OFDM subcarriers.

As discussed above, the LTE PHY maps the various DL and UL physical channels to the resources shown in Figures 3A and 3B, respectively. For example, the PHICH carries HARQ feedback (e.g., ACK/NAK) for UL transmissions by the UEs. Similarly, PDCCH carries scheduling assignments, channel quality feedback *(e.g.,* CSI) for the UL channel, and other control information. Likewise, a PUCCH carries uplink control information such as scheduling requests, CSI for the downlink channel, HARQ feedback for eNB DL transmissions, and other control information. Both PDCCH and PUCCH can be transmitted on aggregations of one or several consecutive control channel elements (CCEs), and a CCE is mapped to the physical resource based on resource element groups (REGs), each of which is comprised of a plurality of REs. For example, a CCE can comprise nine (9) REGs, each of which can comprise four (4) REs.

In LTE, DL transmissions are dynamically scheduled, *i.e.*, in each subframe the base station transmits control information indicating the UE to which data is transmitted and upon which resource blocks the data is transmitted, in the current downlink subframe. This control signaling is typically transmitted in the first n OFDM symbols in each subframe and the number n (=1,2,3 or 4) is known as the Control Format Indicator (CFI) indicated by the PCFICH transmitted in the first symbol of the control region.

Recently, there has been a significant amount of 3GPP standardization activity toward specifying LTE enhancements to cover Machine-to-Machine (M2M) and/or Internet of Things (IoT) related use cases. 3GPP Releases 13 (Rel-13) and 14 (Rel-14) include enhancements to support Machine-Type Communications (MTC) with new UE categories (e.g., Cat-M1, Cat-M2), supporting reduced bandwidth of six physical resource blocks (PRBs) (or up to 24 PRBs for Cat-M2), and Narrowband IoT (NB-IoT) UEs having a new NB radio interface with corresponding new UE categories (e.g., Cat-NB1 and Cat-NB2). In the following discussion, the term "eMTC" is used to distinguish MTC-related LTE enhancements introduced in 3GPP Releases 13-15 from NB-IoT-specific features.

In 3GPP Rel-16, an important objective is improving the transmission efficiency and/or power consumption for UE UL transmissions, which is especially important for NB-IoT UEs and MTC/eMTC UEs. One mechanism for these desired improvements is UE transmission in preconfigured UL resources (PUR) while the UE is in RRC_IDLE and/or RRC_CONNECTED state. When using PUR, the UE does not need to obtain a resource allocation for each transmission, thereby reducing energy consumption. after failure of initial transmission of data using PUR. Because wireless transmission of data is often subject to errors and packet losses, mechanisms for retransmission of data are needed. However, there are no existing mechanisms to facilitate UE retransmission of UL data when using PUR.

### SUMMARY

Embodiments of the present disclosure provide specific improvements to communication between user equipment (UE) and network nodes in a wireless communication network, such as by facilitating solutions to overcome the exemplary problems described above.

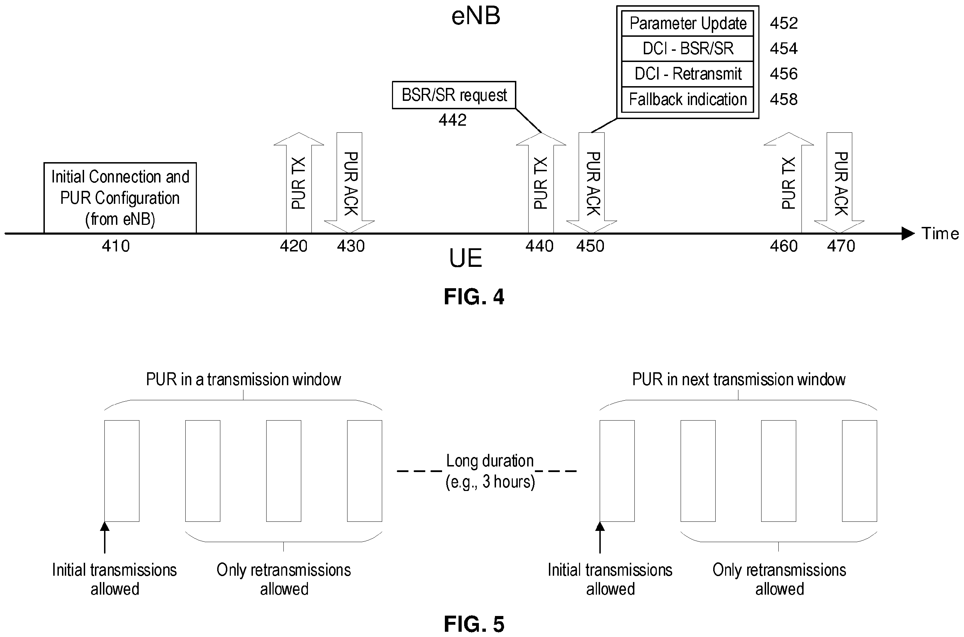

The invention is defined by the appended claims. The following embodiments of the PUR ACK updating the PUR configuration as depicted in fig. 4 in combination with different portions of transmission window available for initial transmissions and reserved for retransmissions as depicted in fig. 5 are used to explain the claimed invention but do not form part of it. Other embodiments discussed below are not embodiments of the claimed invention.

These and other objects, features and advantages of embodiments of the present disclosure will become apparent upon reading the following Detailed Description in view of the Drawings briefly described below.

### BRIEF DESCRIPTION OF THE DRAWINGS

Figure 1 is a high-level block diagram of an exemplary architecture of the Long-Term Evolution (LTE) Evolved UTRAN (E-UTRAN) and Evolved Packet Core (EPC) network, as standardized by 3GPP.
Figure 2A is a high-level block diagram of an exemplary E-UTRAN architecture in terms of its constituent components, protocols, and interfaces.
Figure 2B is a block diagram of exemplary protocol layers of the control-plane portion of the radio (Uu) interface between a user equipment (UE) and the E-UTRAN.
Figure 2C is a block diagram of an exemplary LTE radio interface protocol architecture from the perspective of the PHY layer.
Figures 3A and 3B are block diagrams, respectively, of exemplary downlink and uplink LTE radio frame structures used for frequency division duplexing (FDD) operation;
Figure 4 shows a timeline of various exemplary messages exchanged between a UE and an eNB, according to various exemplary embodiments of the present disclosure.
Figure 5 shows an example arrangement where a first preconfigured uplink resource (PUR) in each transmission window is available for initial transmissions and the remaining PURs in each transmission window are reserved for re-transmissions, according to various exemplary embodiments of the present disclosure.
Figure 6 shows a high-level view of an exemplary 5G network architecture.
Figure 7 shows a flow diagram of an exemplary method (e.g., procedure) performed by a user equipment (UE, e.g., wireless device, MTC device, NB-IoT device, modem, etc. or component thereof), according to various exemplary embodiments of the present disclosure.
Figure 8 shows a flow diagram of an exemplary method (e.g., procedure) performed by a network node (e.g., base station, gNB, eNB, MME, AMF, SMF, etc. or component thereof) in a radio access network (RAN), according to various exemplary embodiments of the present disclosure.
Figure 9 shows a block diagram of an exemplary wireless device or UE according to various exemplary embodiments of the present disclosure.
Figure 10 shows a block diagram of an exemplary network node according to various exemplary embodiments of the present disclosure.
Figure 11 shows a block diagram of an exemplary network configured to provide over-the-top (OTT) data services between a host computer and a UE, according to various exemplary embodiments of the present disclosure.

### DETAILED DESCRIPTION

Some of the embodiments contemplated herein will now be described more fully with reference to the accompanying drawings. Other embodiments, however, are contained within the scope of the subject matter disclosed herein, the disclosed subject matter should not be construed as limited to only the embodiments set forth herein; rather, these embodiments are provided by way of example to convey the scope of the subject matter to those skilled in the art. Furthermore, the following terms are used throughout the description given below:
- Radio Node: As used herein, a "radio node" can be either a "radio access node" or a "wireless device."
- Radio Access Node: As used herein, a "radio access node" (or equivalently "radio network node," "radio access network node," or "RAN node") can be any node in a radio access network (RAN) of a cellular communications network that operates to wirelessly transmit and/or receive signals. Some examples of a radio access node include, but are not limited to, a base station (e.g., a New Radio (NR) base station (gNB) in a 3GPP Fifth Generation (5G) NR network or an enhanced or evolved Node B (eNB) in a 3GPP LTE network), base station distributed components (e.g., CU and DU), a high-power or macro base station, a low-power base station (e.g., micro, pico, femto, or home base station, or the like), an integrated access backhaul (IAB) node, a transmission point, a remote radio unit (RRU or RRH), and a relay node.
- **Core Network Node:** As used herein, a "core network node" is any type of node in a core network. Some examples of a core network node include, *e.g.,* a Mobility Management Entity (MME), a serving gateway (SGW), a Packet Data Network Gateway (P-GW), an access and mobility management function (AMF), a session management function (AMF), a user plane function (UPF), a Service Capability Exposure Function (SCEF), or the like.
- **Wireless Device:** As used herein, a "wireless device" (or "WD" for short) is any type of device that has access to (*i.e*., is served by) a cellular communications network by communicate wirelessly with network nodes and/or other wireless devices. Communicating wirelessly can involve transmitting and/or receiving wireless signals using electromagnetic waves, radio waves, infrared waves, and/or other types of signals suitable for conveying information through air. Unless otherwise noted, the term "wireless device" is used interchangeably herein with "user equipment" (or "UE" for short). Some examples of a wireless device include, but are not limited to, smart phones, mobile phones, cell phones, voice over IP (VoIP) phones, wireless local loop phones, desktop computers, personal digital assistants (PDAs), wireless cameras, gaming consoles or devices, music storage devices, playback appliances, wearable devices, wireless endpoints, mobile stations, tablets, laptops, laptop-embedded equipment (LEE), laptop-mounted equipment (LME), smart devices, wireless customer-premise equipment (CPE), mobile-type communication (MTC) devices, Internet-of-Things (IoT) devices, vehicle-mounted wireless terminal devices, *etc.*
- **Network Node:** As used herein, a "network node" is any node that is either part of the radio access network (e.g., a radio access node or equivalent name discussed above) or of the core network (e.g., a core network node discussed above) of a cellular communications network. Functionally, a network node is equipment capable, configured, arranged, and/or operable to communicate directly or indirectly with a wireless device and/or with other network nodes or equipment in the cellular communications network, to enable and/or provide wireless access to the wireless device, and/or to perform other functions (e.g., administration) in the cellular communications network.

Note that the description given herein focuses on a 3GPP cellular communications system and, as such, 3GPP terminology or terminology similar to 3GPP terminology is oftentimes used. However, the concepts disclosed herein are not limited to a 3GPP system. Furthermore, although the term "cell" is used herein, it should be understood that (particularly with respect to 5G NR) beams may be used instead of cells and, as such, concepts described herein apply equally to both cells and beams.

As briefly mentioned above, there are no existing mechanisms for retransmission of data when using preconfigured uplink resources (PUR), e.g., after failure of initial transmission of data using PUR. Because wireless transmission of data is often subject to errors and packet losses, there is a need for a retransmission scheme even with use of PUR. This is discussed in more detail below.

There are various differences between "legacy" LTE and the procedures and channels defined for eMTC and for NB-IoT. These differences include newly defined physical channels, such as a new physical downlink control channels (called MPDCCH in eMTC and NPDCCH in NB-IoT) and a new physical random-access channel for NB-IoT (called NPRACH). These differences also include coverage level enhancements. By applying repetitions to the transmitted signals and channels, both eMTC and NB-IoT facilitate UE operation at a much lower signal-to-noise-ratio (SNR, also referred to as Es/Iot) compared to LTE. For example, eMTC and NB-IoT have an operating point of Es/Iot ≥ -15 dB while "legacy" LTE UEs can only operate down to -6 dB Es/IoT - a significant, 9-dB enhancement.

As briefly mentioned above, in 3GPP Rel-16, an important objective is improving the transmission efficiency and/or power consumption for UE UL transmissions. For example, with respect to eMTC, an approved work item (WI) proposes to study and, if found beneficial, specify support for UL transmission in preconfigured resources in idle and/or connected mode based on an SC-FDMA waveform for UEs with a valid timing advance (TA). This preconfigured uplink resource (PUR) assigned to the UE can include the time-frequency resources, time duration, periodicity, UE-specific DMRS sequence, etc. The PUR can be assigned to the UE, for example, by RRC signaling from the network.

Some current agreements in relation to PUR in LTE-M include the following:
1. In idle mode, the UE will at least consider one or more of the following attributes when validating TA (combination of multiple attributes is allowed):
   - Serving cell changes (serving cell refers the cell that the UE is camping on)
   - Time Alignment Timer for idle mode
   - Serving cell reference signal received power (RSRP) changes (serving cell refers the cell that the UE is camping on)
   - Other attributes are for further study (FFS):
      ∘ Neighbour cell RSRP change
      ∘ TDOA of >=2 eNBs
      ∘ TA History
      ∘ Subscription based UE differentiation
      ∘ Others not precluded (for example, attributes that need to be considered for high mobility UEs)
      Note that UE power consumption should be taken into account for the FFS attributes
2. Dedicated preconfigured UL resource is defined as an PUSCH resource used by a single UE
   - PUSCH resource is time-frequency resource; and
   - Dedicated PUR is contention-free.
3. Contention-free shared preconfigured UL resource (CFS PUR) is defined as an PUSCH resource simultaneously used by more than one UE.
   - PUSCH resource is at least time-frequency resource; and
   - CFS PUR is contention-free.
4. Contention-based shared preconfigured UL resource (CBS PUR) is defined as an PUSCH resource simultaneously used by more than one UE.
   - PUSCH resource is at least time-frequency resource; and
   - CBS PUR is contention-based (CBS PUR may require contention resolution).
5. In IDLE mode, HARQ is supported for transmission in dedicated PUR
   - A single HARQ process is supported (FFS whether more than one HARQ processes are supported).
   - FFS: The design of the corresponding MPDCCH search space
6. In idle mode, dedicated PUR is supported.
   - Support for CFS PUR is FFS.
   - Support for CBS PUR is FFS.
7. For UL transmission in preconfigured resource, fallback mechanism to RACH/EDT procedures is supported.
8. For transmission in preconfigured UL resources, an RRC idle UE may use the latest TA that passed the validation criteria
9. Pre-configured UL resources for transmission of data are indicated by RRC signalling.At least UE-specific RRC signalling is supported.

Likewise, some current agreements in relation to PUR in NB-IoT include:
1. In idle mode, the UE will at least consider one or more of the following attributes when validating TA (combination of multiple attributes is allowed):
   - Serving cell changes (serving cell refers the cell that the UE is camping on)
   - Time Alignment Timer for idle mode
   - Serving cell NRSRP changes (serving cell refers the cell that the UE is camping on)
   - FFS Other attributes:
      ∘ Neighbour cell NRSRP change
      ∘ TDOA of >=2 eNBs
      ∘ TA History
      ∘ Subscription based UE differentiation
      ∘ Others not precluded (for example, attributes that need to be considered for high mobility UEs)
      Note that UE power consumption should be taken into account for the FFS attributes
2. For transmission in preconfigured UL resources, an RRC idle UE may use the latest TA that passed the validation criteria
3. Pre-configured UL resources for transmission of data are indicated by RRC signalling. At least UE-specific RRC signalling is supported.
4. The resource configuration includes at least the following
   - Time domain resources including periodicity(s)
   - Frequency domain resources
   - TBS(s)/MCS(s)
5. For UL transmission in preconfigured resource, fallback mechanism to RACH/EDT procedures is supported.
6. Dedicated preconfigured UL resource is defined as an NPUSCH resource used by a single UE
   - NPUSCH resource is time-frequency resource
   - Dedicated PUR is contention-free
7. Contention-free shared preconfigured UL resource (CFS PUR) is defined as an NPUSCH resource simultaneously used by more than one UE
   - NPUSCH resource is at least time-frequency resource
   - CFS PUR is contention-free
8. Contention-based shared preconfigured UL resource (CBS PUR) is defined as an NPUSCH resource simultaneously used by more than one UE
   - NPUSCH resource is at least time-frequency resource
   - CBS PUR is contention-based (CBS PUR may require contention resolution)
9. In IDLE mode, HARQ is supported for transmission in dedicated PUR
   - A single HARQ process is supported,
      o FFS whether two HARQ processes are supported
   - FFS: The design of the corresponding NPDCCH search space 10. In idle mode, dedicated PUR is supported.
   - Support for CFS PUR is FFS.
   - Support for CBS PUR is FFS.

Furthermore, for both for LTE-M and NB-IoT, there is an agreement regarding the following terminology:
- Dedicated preconfigured UL resource (Dedicated PUR) is defined as a contention-free PUSCH time-frequency resource used by a single UE.
- Contention-free shared preconfigured UL resource (CFS PUR) is defined as a contention-free PUSCH time-frequency resource simultaneously used by more than one UE
- Contention-based shared preconfigured UL resource (CBS PUR) is defined as a PUSCH resource simultaneously used by more than one UE, that may require contention resolution before use by a particular UE.
- In idle mode, dedicated PUR is supported. Support for CFS PUR and CBS PUR is for further study (FFS).

MTC traffic is typically very infrequent. In concept, given PUR for UL transmission, the UE can use such PUR for sending MTC UL data after confirming it is still in possession of a valid Timing Advance (TA). This reduces and/or eliminates the conventional signaling overhead for acquiring a new TA, and consequently reduces UE power consumption and improves transmission efficiency since fewer radio resources are used. The PUR resource can be similar to PUSCH in the sense that the UE can wake up and immediately transmit user-plane (UP) data so long as it has a valid TA.

Accordingly, exemplary embodiments of the present disclosure provide novel, flexible, and efficient techniques for retransmission of UL data when an initial transmission using PUR was received incorrectly (or not received at all), e.g., by an eNB. In general, after transmitting UL data using PUR, the UE must wait for an acknowledgement (e.g., a PUR ACK) from the eNB concerning the transmitted data. In various embodiments, the PUR ACK can be sent on (N/M)PDCCH, or a message on (N/M)PDCCH can be used to schedule resources for sending the PUR ACK on (N)PDSCH. In some embodiments, both options can be used. In general, however, the UE follows the principle of asynchronous adaptive HARQ, whereby the UE retains transmitted data in the UL buffer until it explicitly receives instructions from the eNB (e.g., via a DCI in (M/N)PDCCH), requesting either a retransmission of the data or a transmission of new data.

Note that unless otherwise specified, the terms "acknowledgement" and "PUR ACK" are used herein to refer to both positive acknowledgements of correct reception and negative acknowledgements of incorrect reception (i.e., NACK).

Figure 4 shows a timeline of various exemplary messages exchanged between a UE and an eNB, according to various exemplary embodiments of the present disclosure. Although the various messages are shown in a particular sequence, this sequence is merely exemplary such that the sequence can be rearranged, messages can be removed from the sequence, and/or messages can be added to the sequence (e.g., between the messages shown). Furthermore, numbering of the different operations and/or messages comprising the sequence is used to facilitate explanation and understanding rather than to suggest any particular order.

In operation 410, a particular UE (e.g., an MTC UE or a NB-IoT UE) connects to a particular eNB, which configures the UE with PUR (i.e., according to a first PUR configuration) for subsequent UL transmission of data, e.g., upon one of the infrequent occasions when the UE has data to transmit. In various embodiments, the first PUR configuration can be dedicated, contention-free shared (CFS), or contention-based shared (CBS). At some future time t1, in operation 420, the UE transmits first UL data using the PUR received in operation 410. Prior to performing the transmission in operation 420, however, the UE can verify that it has a valid TA. In operation 430, after receiving the first data transmitted in operation 420, the eNB transmits a first PUR ACK indicating that the data was correctly received.

In some embodiments, after the transmission of the first UL data using dedicated, CFS, or CBS PUR (e.g., operation 420), the UE waits for a corresponding first PUR ACK from the eNB. If no first PUR ACK is received after a certain time, the UE can determine a legacy (or "fallback") access method supported by both the UE and eNB (e.g., Rel-13/14 random access procedures and/or Rel-15 EDT procedures) and use the determined fallback method to access the system. This fallback procedure can be triggered by expiration of a timer (e.g., a fallback timer started upon the PUR transmission), at which point the UE will conclude that the transmission was not successful and that a fallback procedure is needed. Alternatively, the UE can fall back to the legacy procedure if no PUR ACK has been received during *N* (M/N)PDCCH opportunities, where *N* is predetermined. Alternatively, in case the UE enters discontinuous reception (DRX) after the PUR transmission (e.g., operation 420), the fallback timer could be specified as a predetermined number (e.g., *N*) of DRX-on periods during which the UE monitors (M/N)PDCCH.

PUR ACKs (e.g., the first PUR ACK transmitted/received in operation 430) can take various forms. In some embodiments, PUR ACKs can be a legacy HARQ ACK or RLC ACK messages. In other embodiments, a new DCI format, message, and/or signal can be defined as including any of the information, fields, parameters, values, settings, etc. discussed below in relation to the PUR ACK.

In some embodiments, the UE waits for a PUR ACK from the eNB for both initial transmissions and re-transmissions of UL data using dedicated, CFS, or CBS PUR. In addition to an indication that a data (re-)transmission was (in)correctly received, a PUR ACK can include various information related to subsequent UL transmissions using PUR. For example, the first PUR ACK can include additional values of any of the following parameters related to the UE's subsequent UL transmissions using PUR:
- Timing advanced (TA) value(s);
- Updated PUR resource allocations;
- Number of repetitions;
- Preferred UL receive target;
- Power control commands;
- Redundancy version(s) (RV);
- Modulation and coding schemes (MCS);
- Transport block size (TBS); and/or
- Any other parameter relevant to the PUR configuration.
Some of the above parameters may be updated values of parameters that were provided in the first PUR configuration. Others may be supplemental to the first PUR configuration.

After receiving this information, the UE adopts and applies it in subsequent PUR transmissions, including initial transmissions of data and/or re-transmissions of data. For dedicated PUR and CFS PUR, some or all of this received information can be considered a "second PUR configuration" that overrides the first PUR configuration. In some embodiments, this information can override a previous CBS PUR, which may be common with other UEs that share that particular CBS PUR. In addition, the information can include PHY-layer parameters not strictly associated with the PUR and/or not included in the first PUR configuration (e.g., RV, MCS, TBS, etc.). The UE can also adopt and apply these parameters to subsequent PUR transmissions.

In some embodiments, the UE waits for a PUR ACK from the eNB after an initial transmission of UL data using dedicated, CFS, or CBS PUR. If the acknowledgement is negative ("NACK") or no acknowledgement is received (indicating, e.g., that the UL transmission was not received by the eNB), the UE re-evaluates the validity of its TA value. The UE's TA re-evaluation can be based on second criteria that are stricter than first criteria used to evaluate TA validity prior to the initial data transmission using the PUR. Various criteria can be used, including ones mentioned above. For example, the eNB can signal both the first and the second criteria in an RRC message. Alternately, the eNB can signal the first criteria and the UE can derive the second criteria from the first criteria and one or more offset values. For example, if the TA evaluation is based on serving cell reference signal received power (RSRP) changes, the first criteria can include an X dB change and the second criteria (e.g., if the first PUR attempt fails) can include an X-Δ dB change, where offset Δ > 0 can be signaled by the network (e.g., via RRC) or explicitly predetermined. In some embodiments, different criteria (e.g., different Δ values) can be used for each successive retransmission attempt.

In some embodiments, the TA evaluation can utilize different methods for the initial evaluation (e.g., before initial transmission) and re-evaluation after a NACK or no acknowledgement. For example, the initial evaluation can be based on RSRP changes, while the re-evaluation can also be based on time-difference of arrival (TDOA) and reference signal received quality (RSRQ), including possibly signals from more than one cell.

In some embodiments, if the acknowledgement is negative ("NACK") or no acknowledgement is received (indicating, e.g., that the UL transmission was not received by the eNB), the UE can also re-evaluate its UL transmission power. This can be especially important in the case when no acknowledgement is received. As such, the first and second criteria can include different transmission power values in the same manner as TA, discussed above.

In both dedicated and CFS PUR, the UE is assigned resources exclusive of the resources assigned to other UEs, such that there are no data losses due to contention with other UEs. As such, these two techniques can be generally referred to as "contention-free PUR." For CFS PUR, this can often involve another resource dimension than time and frequency, such as spatial or code domains. Even so, initial contention-free PUR transmissions can be unsuccessful due to different reasons, such as insufficient UE UL power, signal fading, or too high code rate (e.g., insufficient redundancy). In some cases, the eNB simply cannot detect the UL signal, e.g., due to insufficient received power or too high interference. In some cases, the eNB can detect the UL signal, but cannot decode the message, e.g., due to too high code rate and/or wrong TA values. As such, these different scenarios require different error handling.

In some embodiments, the UE waits for a PUR ACK from the eNB after an initial transmission of UL data using dedicated or CFS PUR. In the PUR ACK, the eNB can indicate the initial message was incorrectly received, and that UE should use a different "fallback" procedure to access the system, preferably a procedure that both the UE and eNB support. For example, such fallback procedures can include Rel-13/Rel-14 ("legacy") random access procedures and/or Rel-15 early data transmission (EDT) procedures.

In some embodiments, the UE waits for a PUR ACK from the eNB after an initial transmission of UL data using dedicated or CFS PUR. In the PUR ACK, the eNB can indicate that the UE is not allowed to use PUR transmission for some number of PUR transmission opportunities ("suspended PUR") or can revoke the UE's PUR configuration ("deactivated PUR").

In some embodiments, in dedicated or CFS PUR, different redundancy versions (RVs) can be used for an initial transmission of data and the re-transmission(s) of that data. The initial transmission can be configured explicitly or implicitly (e.g., during setup operations in 410) or can be predetermined (e.g., specified in the standards). After sending the initial message in the UL, the UE waits for an acknowledgement from the eNB. If the eNB detects the UL transmission, but cannot successfully decode the transmission, the eNB can allocate dedicated time-frequency UL resources for a retransmission in the PUR ACK. For example, the message carrying the PUR ACK can also include a DCI for the dynamical scheduling of the re-transmission. In some embodiments, the eNB can indicate a particular RV to use for the re-transmission.

Returning to the example in Figure 4, subsequently in operation 440 at some future time t2, the UE transmits a second UL data message using the PUR received in operation 410. If the eNB receives the second UL data message, it responds in operation 450 with a corresponding second PUR ACK in the same manner as in operation 430, discussed above. In addition, the eNB can include various information related to subsequent UL transmissions using PUR discussed above. For example, the eNB can include a parameter update 452, which can include any of the parameters related to the UE's subsequent UL transmissions listed above. In some cases, the information related to subsequent UL transmissions included in PUR ACK 450 can identify dedicated time-frequency resources for the retransmission of the data (shown as field "DCI - ReTx 456"). This information can be included, for example, if the PUR ACK 450 indicates that the second UL data message sent in 440 was not correctly received by the eNB.

In some embodiments, the information related to subsequent UL transmissions can include fallback indicator 458, by which the eNB can indicate that the UE should use fallback procedure(s) to access the network, such as the legacy random access procedures and/or EDT procedures discussed above. Optionally, fallback indicator 458 can identify the fallback procedure(s).

In some embodiments, the UE's second UL data message sent in operation 440 can include a request for resources to transmit a buffer status report (BSR) and/or a scheduling request (SR). This is illustrated in Figure 4 as "BSR/SR request 442." In such cases, the eNB can include in the second PUR ACK (i.e., transmitted in operation 450) a DCI - BSR/SR field 456 that identifies dedicated time-frequency resources for the UE's transmission of the BSR and/or SR.

It should be noted that in case the UE did not receive the first PUR ACK 430, the second UL data message transmitted in operation 440 will be a retransmission of the first UL data message, sent in 420. In such cases, the UE can re-evaluate its transmission power and/or TA prior to transmission in operation 440, in the manner discussed above. Likewise, in case the first PUR ACK 430 was not received or indicated incorrect reception of the first UL data message by the eNB, the UE can retransmit the first UL data message in operation 440 according to a fallback procedure.

Subsequently, in operation 460 at some future time t3, the UE transmits further UL data using the first PUR configuration received in operation 410 or an updated PUR configuration according to the information received in operation 450. In case the transmission in 440 was correctly received as indicated by a positive PUR ACK in operation 450, the further UL data can be an initial transmission of third UL data. In case the transmission in 440 was not correctly received as indicated by a negative PUR ACK in operation 450 (as discussed above), the further UL data can be a re-transmission of the second UL data initially transmitted in operation 440. In operation 470, the eNB responds with a PUR ACK concerning the further UL data transmitted in operation 460. This PUR ACK can be a positive or a negative acknowledgement and can include any of the information discussed above in relation to the various embodiments.

With respect to contention-based shared (CBS) PUR, the UE and the eNB can generally operate in the same manner as discussed above with respect to contention-free PUR. For example, the eNB can include in the PUR ACK the parameter update 452, indicating any of the additional configuration settings, parameters, and/or values pertaining to the CBS PUR or the PHY layer. Even so, some embodiments specific to CBS PUR are discussed in more detail below.

In some embodiments, the UE waits for a PUR ACK from the eNB after an initial transmission of UL data using CBS PUR. In the PUR ACK, the eNB can indicate that the initial data transmission using the CBS PUR was incorrectly received ("NACK"), and that the UE(s) assigned to the CBS PUR should use a different CBS PUR configuration, e.g., corresponding to an enhanced coverage level. In some embodiments, the eNB can also indicate, together with the NACK, revocation of the particular UE's TA value, CBS PUR configuration, and/or PHY-layer parameters used for the initial transmission.

In some embodiments, the UE waits for a PUR ACK from the eNB after an initial transmission of UL data using CBS PUR. In the PUR ACK, the eNB can include an additional PUR configuration (e.g., further time and frequency resources) for any potential retransmission. This retransmission configuration can include a number of repeated PUR resources or PUR resources in a certain retransmission window. Figure 5 shows an example arrangement where a first PUR in each UE transmission window is available for initial transmissions and the remaining PURs in each transmission window are reserved for retransmissions, according to these embodiments.

Each contention-free PUR is configured according to a particular UE's expected traffic periodicity. In CBS PUR, however, the shared PURs are expected to be allocated much more frequently than any particular UE's expected traffic periodicity. In other words, several shared PURs in a transmission window can be available for each UE UL data transmission.

According to the invention, some number of CBS PURs in a transmission window is allocated for initial data transmissions, and the remainder of CBS PURs in the transmission window is reserved for re-transmission of data. Figure 5 shows an example arrangement where the first PUR in each window is available for initial transmissions and the remaining three PURs in each transmission window are reserved for re-transmission.

In some embodiments, the eNB can send to the UE a contention resolution identity that resolving the contention for a CBS PUR. In such embodiments, the UE can interpret this identity as a (positive) PUR ACK of the initial PUR transmission. This identity can be associated with the UE during configuring the PUR resources (e.g., operation 410), or it can be the same as or similar to identities used in legacy connections, e.g., C-RNTI, UE Contention Resolution Identity corresponding to a sent CCCH SDU as specified in 3GPP TS 36.321.

In some embodiments, a new type of contention-resolution message sent by eNB to UE can be defined to include any of the information discussed above as being included in PUR ACK. In some embodiments, such a message can also include the contention resolution identity.

Although embodiments have been described above in relation to communication between the UE and an eNB, other embodiments can involve communication between the UE and a different network node. For example, the UE can communicate with an MME for PUR using the CIoT CP-optimization and the configuration of PUR parameters.

As another example, for 5G networks, the UE can communicate with a gNB or components thereof, such as gNB-CU and/or gNB-DU, as well as other 5GC nodes such as access management function (AMF), session management function (SMF), etc.

Embodiments described above are also applicable to 5G networks. While LTE was primarily designed for user-to-user communications, 5G (also referred to as "NR") networks are envisioned to support both high single-user data rates (e.g., 1 Gb/s) and large-scale, machine-to-machine communication involving short, bursty transmissions from many different devices that share the frequency bandwidth. The 5G radio standards (also referred to as "New Radio" or "NR") are currently targeting a wide range of data services including eMBB (enhanced Mobile Broad Band), URLLC (Ultra-Reliable Low Latency Communication), and Machine-Type Communications (MTC). These services can have different requirements and objectives. For example, URLLC is intended to provide a data service with extremely strict error and latency requirements, e.g., error probabilities as low as 10⁻⁵ or lower and 1 ms end-to-end latency or lower. For eMBB, the requirements on latency and error probability can be less stringent whereas the required supported peak rate and/or spectral efficiency can be higher. In contrast, URLLC requires low latency and high reliability but with less strict data rate requirements.

One of the solutions for low latency data transmission is shorter transmission time intervals. For NR, in addition to transmission in a slot (such as for LTE, discussed above), a mini-slot transmission is also allowed to reduce latency. A mini-slot may consist of any number of one to 14 OFDM symbols. It should be noted that the concepts of slot and mini-slot are not specific to a specific service meaning that a mini-slot may be used for either eMBB, URLLC, or other services.

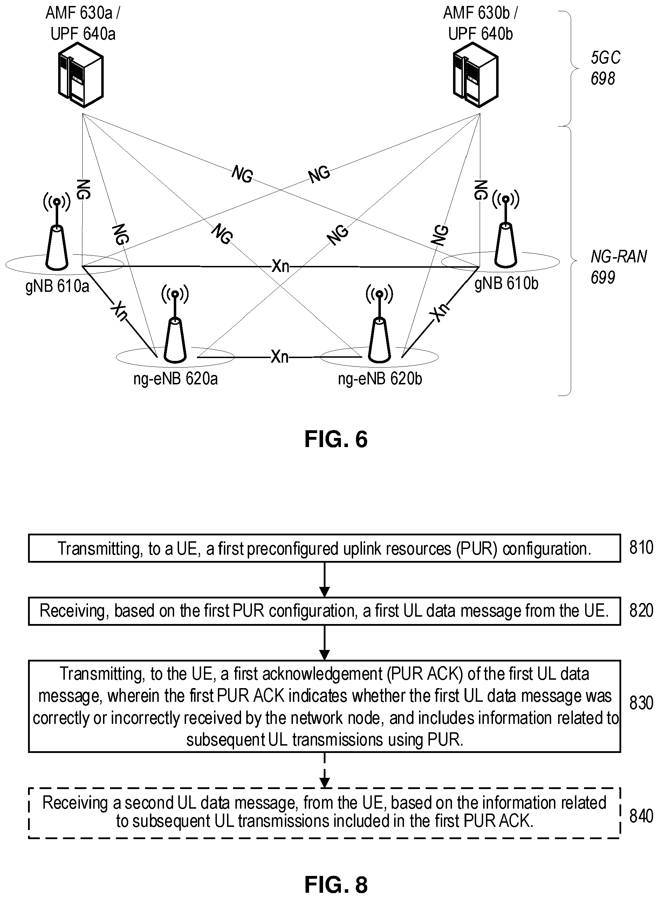

Figure 6 shows a high-level view of an exemplary 5G network architecture, including next-generation RAN (NG-RAN) 699 and 5G core network (5GC) 698. As shown in the figure, NG-RAN 699 can include gNBs 610 (e.g., 610a,b) and ng-eNBs 620 (e.g., 620a,b) that are interconnected with each other via respective Xn interfaces. The gNBs and ng-eNBs are also connected via the NG interfaces to 5GC 698, more specifically to the AMF (Access and Mobility Management Function) 630 (e.g., AMFs 630a,b) via respective NG-C interfaces and to the UPF (User Plane Function) 640 (e.g., UPFs 640a,b) via respective NG-U interfaces.

Each of the gNBs 610 can support the NR radio interface, including frequency division duplexing (FDD), time division duplexing (TDD), or a combination thereof. Each of ng-eNB s 620 supports the LTE radio interface and connect to the 5GC via the NG interface, whereas conventional LTE eNBs connect to an EPC via the X2 interface (e.g., as illustrated in Figure 1).

Each of gNBs 610a,b shown in Figure 6 can include a central (or centralized) unit (CU or gNB-CU) and one or more distributed (or decentralized) units (DU or gNB-DU). CUs are logical nodes that host higher-layer protocols and perform various gNB functions such controlling the operation of DUs. Likewise, DUs are logical nodes that hosts lower-layer protocols and can include various subsets of the gNB functions, depending on the functional split. As such, each of the CUs and DUs can include various circuitry needed to perform their respective functions, including processing circuitry, transceiver circuitry (e.g., for communication), and power supply circuitry. A gNB-CU connects to its gNB-DUs over respective F1 logical interfaces.

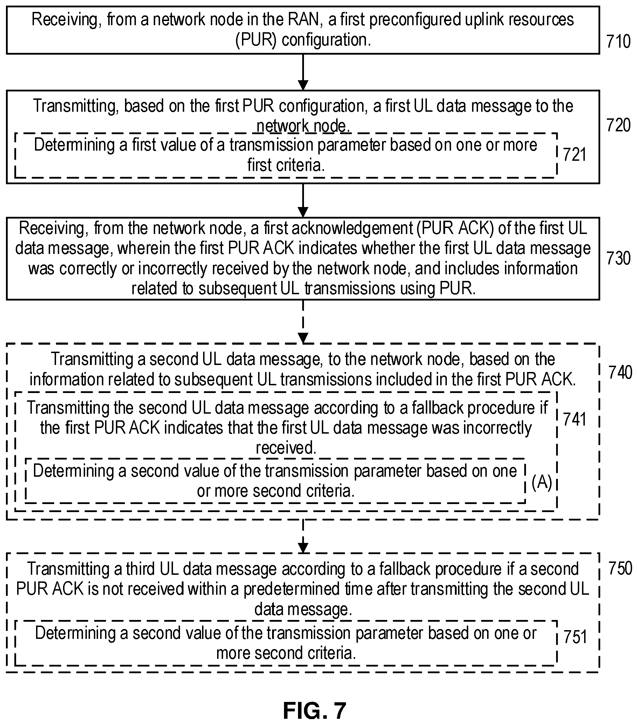

These embodiments described above can be further illustrated with reference to Figures 7-8, which depict exemplary methods (e.g., procedures) performed by a UE and a network node, respectively. Put differently, various features of the operations described below correspond to various embodiments described above.

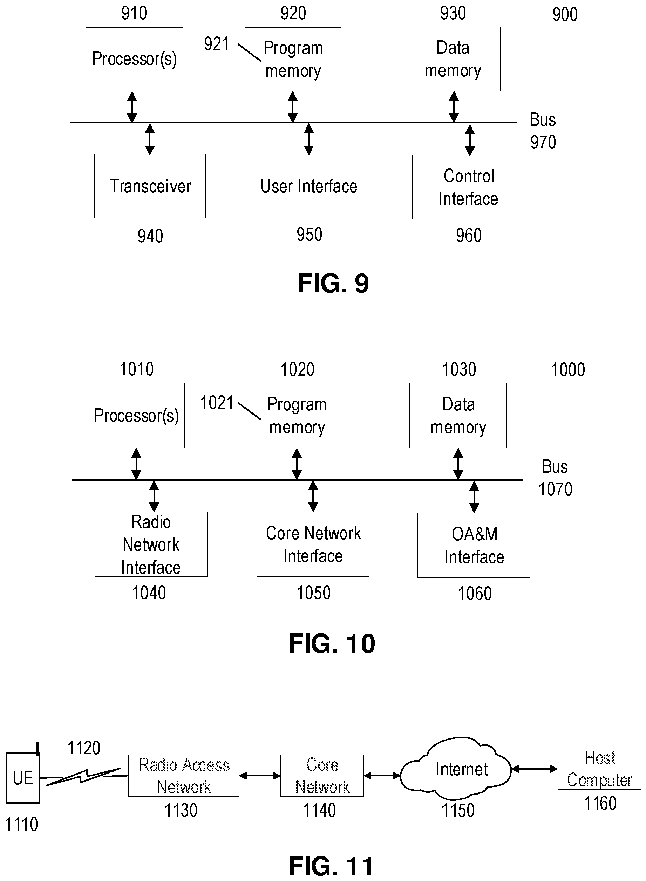

In particular, Figure 7 shows a flow diagram of an exemplary method (e.g., procedure) for transmitting uplink (UL) data using preconfigured uplink resources (PUR) in a radio access network (RAN), according to various exemplary embodiments of the present disclosure. The exemplary method can be performed by a user equipment (e.g., UE, wireless device, MTC device, NB-IoT device, modem, *etc.* or component thereof) in communication with a network node *(e.g.,* base station, eNB, gNB, *etc.,* or components thereof) serving a cell in the RAN. For example, the exemplary method shown in Figure 7 can be implemented, for example, in a UE or device configured according to Figure 9 (described below).

Furthermore, the exemplary method shown in Figure 7 can be used cooperatively with other exemplary methods described herein (e.g., Figure 8) to provide various exemplary benefits described herein. Although Figure 7 shows specific blocks in a particular order, the operations of the exemplary method can be performed in a different order than shown and can be combined and/or divided into blocks having different functionality than shown. Optional blocks or operations are indicated by dashed lines.

The exemplary method can include the operations of block 710, where the UE can receive, from a network node (e.g., in the RAN), a first PUR configuration. The exemplary method can also include the operations of block 720, where the UE can transmit, based on the first PUR configuration, a first UL data message to the network node. The exemplary method can also include the operations of block 730, where the UE can receive, from the network node, a first acknowledgement (PUR ACK) of the first UL data message. The first PUR ACK can indicate whether the first UL data message was correctly or incorrectly received by the network node and can include information related to subsequent UL transmissions using PUR.

In some embodiments, the exemplary method can also include the operations of block 740, where the UE can transmit a second UL data message, to the network node, based on the information related to subsequent UL transmissions included in the first PUR ACK. For example, if the first PUR ACK indicates that the first UL data message was correctly received, the second UL data message can be different than the first UL data message. Likewise, if the first PUR ACK indicates that the first UL data message was incorrectly received, the second UL data message can be a re-transmission of the first UL data message.

In some embodiments, the information related to subsequent UL transmissions using PUR includes at least one of the following:
- timing advance for uplink timing alignment;
- transmission resource allocation;
- number of repetitions of an UL data message;
- power control command;
- redundancy version of an UL data message;
- modulation and coding scheme for an UL data message; and
- transport block size for an UL data message.

In some embodiments, the information related to subsequent UL transmissions includes a second PUR configuration, and the second UL data message is transmitted (e.g., in block 740) based on the second PUR configuration.

In some embodiments, the information related to subsequent UL transmissions can include one or more physical-layer (PHY) parameters, e.g., in addition to or instead of the parameters comprising the second PUR configuration. In such embodiments, the second UL data message can be transmitted based on the one or more PHY parameters.

In some embodiments, both the first PUR configuration and the second PUR configuration can be one of the following: dedicated PUR configurations, contention-free shared (CFS) PUR configurations, or contention-based shared (CBS) PUR configurations. In some embodiments, the second PUR configuration can be the same as the first PUR configuration.

In some embodiments, both the first PUR configuration and the second PUR configuration can be contention-based shared (CBS) PUR configurations. In such embodiments, the second PUR configuration can identify a first portion of one or more transmission time windows that is available for initial transmission of UL data messages, and a second portion of the one or more transmission time windows that is reserved for retransmissions of UL data messages. An example of such embodiments is shown in Figure 5.

In some embodiments, the operations of block 740 can include the operations of sub-block 741, where the UE can transmit the second UL data message according to a fallback procedure if the first PUR ACK indicates that the first UL data message was incorrectly received by the network node. In other embodiments, the exemplary method can also include the operations of block 750, where the UE can transmit a third UL data message according to a fallback procedure if a second PUR ACK is not received within a predetermined time after transmitting the second UL data message. However, skilled persons will recognize that if the first PUR ACK was not received in block 730 within the predetermined time after transmitting the first UL data message, the UE can transmit the second UL data message according to the fallback procedure, provided that the UE was previously configured (or pre-configured) with the fallback procedure.

In some embodiments, the information related to subsequent UL transmissions can include an indication that the UE should use the fallback procedure for transmitting one or more subsequent UL data messages (e.g., the second UL data message or the third UL data message). In some embodiments, the indication further indicates that the UE should use the fallback procedure for transmitting all subsequent UL data messages. In some embodiments, the fallback procedure comprises a legacy random-access procedure or an early data transmission (EDT) procedure (e.g., such as standardized in 3GPP Rel-15).

In some embodiments, a first value of a transmission parameter can be used when transmitting the first UL data message (e.g., in block 720), and a second value of the transmission parameter is used when transmitting a subsequent UL data message according to the fallback procedure. The subsequent UL data message can be the second UL data message transmitted in sub-block 741, or the third UL data message transmitted in block 750.

In some embodiments, transmitting the first UL data message in block 720 can include determining the first value of the transmission parameter based on one or more first criteria (e.g., in sub-block 721). Likewise, transmitting the subsequent UL data message (e.g., in sub-block 741 or block 750) can include determining the second value of the transmission parameter based on one or more second criteria (e.g., in sub-block 741A or 751). In some embodiments, the second criteria are based on the first criteria and respective predetermined offsets (e.g., offset Δ discussed above). In some embodiments, the second criteria include one or more criteria not included in the first criteria (e.g., RSRP in first criteria, TDOA and RSRQ in second criteria, as discussed above). In some embodiments, the transmission parameter evaluated according to the first criteria and second criteria can be a timing advance (TA) for transmission timing alignment or a transmission power level

In some embodiments, the first PUR ACK can be received as one of the following: DCI; HARQ acknowledgement message; or RLC acknowledgement message. In some embodiments, if the first PUR ACK indicates that the first UL data message was incorrectly received, the information related to subsequent UL transmissions (e.g., included with the first PUR ACK received in block 730) includes an allocation of dedicated resources for retransmission of the first UL data message (e.g., as illustrated by field 456 in Figure 4).

In some embodiments, the first UL data message can include a request for resources to transmit a buffer status report (BSR) or a scheduling request (SR) (e.g., as illustrated by field 442 in Figure 4). In such embodiments, the first PUR ACK includes an allocation of dedicated resources for transmission of the BSR or the SR (e.g., as illustrated by field 454 in Figure 4).

In addition, Figure 8 shows a flow diagram of an exemplary method (e.g., procedure) for receiving uplink (UL) data transmitted by one or more user equipment (UEs) using preconfigured uplink resources (PUR) in a radio access network (RAN), according to various exemplary embodiments of the present disclosure. The exemplary method can be performed by a network node *(e.g.,* base station, eNB, gNB, *etc.,* or component thereof) in communication with one or more user equipment (UEs, e.g., wireless devices, MTC devices, NB-IoT devices, modems, etc. or component thereof) via a cell in the RAN. For example, the exemplary method shown in Figure 8 can be performed by a network node configured according to Figure 10 (described below).

Furthermore, the exemplary method shown in Figure 8 can be used cooperatively with other exemplary methods described herein (e.g., Figure 7) to provide various exemplary benefits described herein. Although Figure 8 shows specific blocks in a particular order, the operations of the exemplary method can be performed in a different order than shown and can be combined and/or divided into blocks having different functionality than shown. Optional blocks or operations are indicated by dashed lines.

The exemplary method illustrated in Figure 8 can include the operations of block 810, where the network node can transmit, to a UE, a first PUR configuration. The exemplary method can also include operations of block 820, where the network node can receive, based on the first PUR configuration, a first UL data message from the UE. The exemplary method can also include operations of block 830, where the network node can transmit, to the UE, a first acknowledgement (PUR ACK) of the first UL data message. The first PUR ACK can indicate whether the first UL data message was correctly or incorrectly received by the network node and can include information related to subsequent UL transmissions using PUR.

In some embodiments, the exemplary method can also include the operations of block 840, where the network node can receive a second UL data message, from the UE, based on the information related to subsequent UL transmissions included in the first PUR ACK. For example, if the first PUR ACK indicates that the first UL data message was correctly received, the second UL data message can be different than the first UL data message. Likewise, if the first PUR ACK indicates that the first UL data message was incorrectly received, the second UL data message can be a re-transmission of the first UL data message.

In some embodiments, the information related to subsequent UL transmissions using PUR includes at least one of the following:
- timing advance for uplink timing alignment;
- transmission resource allocation;
- number of repetitions of an UL data message;
- power control command;
- redundancy version of an UL data message;
- modulation and coding scheme for an UL data message; and
- transport block size for an UL data message.

In some embodiments, the information related to subsequent UL transmissions includes a second PUR configuration, and the second UL data message is received (e.g., in block 840) based on the second PUR configuration.

In some embodiments, both the first PUR configuration and the second PUR configuration can be one of the following: dedicated PUR configurations, contention-free shared (CFS) PUR configurations, or contention-based shared (CBS) PUR configurations. In some embodiments, the second PUR configuration can be the same as the first PUR configuration.

In some embodiments, both the first PUR configuration and the second PUR configuration can be contention-based shared (CBS) PUR configurations. In such embodiments, the second PUR configuration can identify a first portion of one or more transmission time windows that is available for initial transmission of UL data messages, and a second portion of the one or more transmission time windows that is reserved for retransmissions of UL data messages. An example of such embodiments is shown in Figure 5.

In some embodiments, the first PUR ACK can be transmitted as one of the following: DCI; HARQ acknowledgement message; or RLC acknowledgement message. In some embodiments, if the first PUR ACK indicates that the first UL data message was incorrectly received, the information related to subsequent UL transmissions (e.g., included with the first PUR ACK transmitted in block 830) can include one of the following: an indication of a fallback procedure for the UE (e.g., as illustrated by field 458 in Figure 4), or an allocation of dedicated resources for retransmission of the first UL data message (e.g., as illustrated by field 456 in Figure 4). In some embodiments, the fallback procedure can be a legacy random-access procedure or an early data transmission (EDT) procedure (e.g., such as standardized in 3GPP Rel-15).

In some embodiments, the first UL data message can include a request for resources to transmit a buffer status report (BSR) or a scheduling request (SR) (e.g., as illustrated by field 442 in Figure 4). In such embodiments, the first PUR ACK can include an allocation of dedicated resources for transmission of the BSR or the SR (e.g., as illustrated by field 454 in Figure 4).

Although various embodiments are described herein above in terms of methods, apparatus, devices, computer-readable medium and receivers, the person of ordinary skill will readily comprehend that such methods can be embodied by various combinations of hardware and software in various systems, communication devices, computing devices, control devices, apparatuses, non-transitory computer-readable media, *etc.*

Figure 9 shows a block diagram of an exemplary wireless device or user equipment (UE) 900 (hereinafter referred to as "UE 900") according to various embodiments of the present disclosure, including those described above with reference to other figures. For example, UE 900 can be configured by execution of instructions, stored on a computer-readable medium, to perform operations corresponding to one or more of the exemplary methods and/or procedures described above.

UE 900 can include a processor 910 (also referred to as "processing circuitry") that can be operably connected to a program memory 920 and/or a data memory 930 via a bus 970 that can comprise parallel address and data buses, serial ports, or other methods and/or structures known to those of ordinary skill in the art. Program memory 920 can store software code, programs, and/or instructions (collectively shown as computer program product 921 in Figure 9) that, when executed by processor 910, can configure and/or facilitate UE 900 to perform various operations, including operations described below. For example, execution of such instructions can configure and/or facilitate UE 900 to communicate using one or more wired or wireless communication protocols, including one or more wireless communication protocols standardized by 3GPP, 3GPP2, or IEEE, such as those commonly known as 5G/NR, LTE, LTE-A, UMTS, HSPA, GSM, GPRS, EDGE, 1xRTT, CDMA2000, 802.11 WiFi, HDMI, USB, Firewire, *etc.,* or any other current protocols that can be utilized in conjunction with radio transceiver 940, user interface 950, and/or host interface 960.

As another example, processor 910 can execute program code stored in program memory 920 that corresponds to MAC, RLC, PDCP, and RRC layer protocols standardized by 3GPP (e.g., for NR and/or LTE). As a further example, processor 910 can execute program code stored in program memory 920 that, together with radio transceiver 940, implements corresponding PHY layer protocols, such as Orthogonal Frequency Division Multiplexing (OFDM), Orthogonal Frequency Division Multiple Access (OFDMA), and Single-Carrier Frequency Division Multiple Access (SC-FDMA). As another example, processor 910 can execute program code stored in program memory 920 that, together with radio transceiver 940, implements device-to-device (D2D) communications with other compatible devices and/or UEs.

Program memory 920 can also include software code executed by processor 910 to control the functions of UE 900, including configuring and controlling various components such as radio transceiver 940, user interface 950, and/or host interface 960. Program memory 920 can also comprise one or more application programs and/or modules comprising computer-executable instructions embodying any of the exemplary methods and/or procedures described herein. Such software code can be specified or written using any known programming language, such as *e.g.,* Java, C++, C, Objective C, HTML, XHTML, machine code, and Assembler, as long as the desired functionality, *e*.*g*., as defined by the implemented method steps, is preserved. In addition, or as an alternative, program memory 920 can comprise an external storage arrangement (not shown) remote from UE 900, from which the instructions can be downloaded into program memory 920 located within or removably coupled to UE 900, so as to enable execution of such instructions.

Data memory 930 can include memory area for processor 910 to store variables used in protocols, configuration, control, and other functions of UE 900, including operations corresponding to, or comprising, any of the exemplary methods and/or procedures described herein. Moreover, program memory 920 and/or data memory 930 can include non-volatile memory (*e*.*g*., flash memory), volatile memory (*e*.*g*., static or dynamic RAM), or a combination thereof. Furthermore, data memory 930 can comprise a memory slot by which removable memory cards in one or more formats (*e*.*g*., SD Card, Memory Stick, Compact Flash, *etc.)* can be inserted and removed.

Persons of ordinary skill will recognize that processor 910 can include multiple individual processors (including, *e*.*g*., multi-core processors), each of which implements a portion of the functionality described above. In such cases, multiple individual processors can be commonly connected to program memory 920 and data memory 930 or individually connected to multiple individual program memories and or data memories. More generally, persons of ordinary skill in the art will recognize that various protocols and other functions of UE 900 can be implemented in many different computer arrangements comprising different combinations of hardware and software including, but not limited to, application processors, signal processors, general-purpose processors, multi-core processors, ASICs, fixed and/or programmable digital circuitry, analog baseband circuitry, radio-frequency circuitry, software, firmware, and middleware.

Radio transceiver 940 can include radio-frequency transmitter and/or receiver functionality that facilitates the UE 900 to communicate with other equipment supporting like wireless communication standards and/or protocols. In some exemplary embodiments, the radio transceiver 940 includes one or more transmitters and one or more receivers that enable UE 900 to communicate according to various protocols and/or methods proposed for standardization by 3GPP and/or other standards bodies. For example, such functionality can operate cooperatively with processor 910 to implement a PHY layer based on OFDM, OFDMA, and/or SC-FDMA technologies, such as described herein with respect to other figures.

In some exemplary embodiments, radio transceiver 940 includes one or more transmitters and one or more receivers that can facilitate the UE 900 to communicate with various LTE, LTE-Advanced (LTE-A), and/or NR networks according to standards promulgated by 3GPP. In some exemplary embodiments of the present disclosure, the radio transceiver 940 includes circuitry, firmware, *etc.* necessary for the UE 900 to communicate with various NR, NR-U, LTE, LTE-A, LTE-LAA, UMTS, and/or GSM/EDGE networks, also according to 3GPP standards. In some embodiments, radio transceiver 940 can include circuitry supporting D2D communications between UE 900 and other compatible devices.

In some embodiments, radio transceiver 940 includes circuitry, firmware, *etc.* necessary for the UE 900 to communicate with various CDMA2000 networks, according to 3GPP2 standards. In some embodiments, the radio transceiver 940 can be capable of communicating using radio technologies that operate in unlicensed frequency bands, such as IEEE 802.11 WiFi that operates using frequencies in the regions of 2.4, 5.6, and/or 60 GHz. In some embodiments, radio transceiver 940 can include a transceiver that is capable of wired communication, such as by using IEEE 802.3 Ethernet technology. The functionality particular to each of these embodiments can be coupled with and/or controlled by other circuitry in the UE 900, such as the processor 910 executing program code stored in program memory 920 in conjunction with, and/or supported by, data memory 930.

User interface 950 can take various forms depending on the particular embodiment of UE 900, or can be absent from UE 900 entirely. In some embodiments, user interface 950 can comprise a microphone, a loudspeaker, slidable buttons, depressible buttons, a display, a touchscreen display, a mechanical or virtual keypad, a mechanical or virtual keyboard, and/or any other user-interface features commonly found on mobile phones. In other embodiments, the UE 900 can comprise a tablet computing device including a larger touchscreen display. In such embodiments, one or more of the mechanical features of the user interface 950 can be replaced by comparable or functionally equivalent virtual user interface features (*e*.*g*., virtual keypad, virtual buttons, *etc.)* implemented using the touchscreen display, as familiar to persons of ordinary skill in the art. In other embodiments, the UE 900 can be a digital computing device, such as a laptop computer, desktop computer, workstation, *etc.* that comprises a mechanical keyboard that can be integrated, detached, or detachable depending on the particular exemplary embodiment. Such a digital computing device can also comprise a touch screen display. Many exemplary embodiments of the UE 900 having a touch screen display are capable of receiving user inputs, such as inputs related to exemplary methods and/or procedures described herein or otherwise known to persons of ordinary skill in the art.

In some embodiments, UE 900 can include an orientation sensor, which can be used in various ways by features and functions of UE 900. For example, the UE 900 can use outputs of the orientation sensor to determine when a user has changed the physical orientation of the UE 900's touch screen display. An indication signal from the orientation sensor can be available to any application program executing on the UE 900, such that an application program can change the orientation of a screen display (*e*.*g*., from portrait to landscape) automatically when the indication signal indicates an approximate 90-degree change in physical orientation of the device. In this exemplary manner, the application program can maintain the screen display in a manner that is readable by the user, regardless of the physical orientation of the device. In addition, the output of the orientation sensor can be used in conjunction with various exemplary embodiments of the present disclosure.

A control interface 960 of the UE 900 can take various forms depending on the particular exemplary embodiment of UE 900 and of the particular interface requirements of other devices that the UE 900 is intended to communicate with and/or control. For example, the control interface 960 can comprise an RS-232 interface, an RS-495 interface, a USB interface, an HDMI interface, a Bluetooth interface, an IEEE ("Firewire") interface, an I²C interface, a PCMCIA interface, or the like. In some exemplary embodiments of the present disclosure, control interface 960 can comprise an IEEE 802.3 Ethernet interface such as described above. In some exemplary embodiments of the present disclosure, the control interface 960 can comprise analog interface circuitry including, for example, one or more digital-to-analog (D/A) and/or analog-to-digital (A/D) converters.

Persons of ordinary skill in the art can recognize the above list of features, interfaces, and radio-frequency communication standards is merely exemplary, and not limiting to the scope of the present disclosure. In other words, the UE 900 can comprise more functionality than is shown in Figure 9 including, for example, a video and/or still-image camera, microphone, media player and/or recorder, *etc.* Moreover, radio transceiver 940 can include circuitry necessary to communicate using additional radio-frequency communication standards including Bluetooth, GPS, and/or others. Moreover, the processor 910 can execute software code stored in the program memory 920 to control such additional functionality. For example, directional velocity and/or position estimates output from a GPS receiver can be available to any application program executing on the UE 900, including various exemplary methods and/or computer-readable media according to various exemplary embodiments of the present disclosure.

Figure 10 shows a block diagram of an exemplary network node 1000 according to various embodiments of the present disclosure, including those described above with reference to other figures. For example, exemplary network node 1000 can be configured by execution of instructions, stored on a computer-readable medium, to perform operations corresponding to one or more of the exemplary methods and/or procedures described above. In some exemplary embodiments, network node 1000 can comprise a base station, eNB, gNB, or one or more components thereof. For example, network node 1000 can be configured as a central unit (CU) and one or more distributed units (DUs) according to NR gNB architectures specified by 3GPP. More generally, the functionally of network node 1000 can be distributed across various physical devices and/or functional units, modules, etc.

Network node 1000 can include processor 1010 (also referred to as "processing circuitry") that is operably connected to program memory 1020 and data memory 1030 via bus 1070, which can include parallel address and data buses, serial ports, or other methods and/or structures known to those of ordinary skill in the art.

Program memory 1020 can store software code, programs, and/or instructions (collectively shown as computer program product 1021 in Figure 10) that, when executed by processor 1010, can configure and/or facilitate network node 1000 to perform various operations. For example, execution of such stored instructions can configure network node 1000 to communicate with one or more other devices using protocols according to various embodiments of the present disclosure, including one or more exemplary methods and/or procedures discussed above. Program memory 1020 can also comprise software code executed by processor 1010 that can facilitate and specifically configure network node 1000 to communicate with one or more other devices using other protocols or protocol layers, such as one or more of the PHY, MAC, RLC, PDCP, and RRC layer protocols standardized by 3GPP for LTE, LTE-A, and/or NR, or any other higher-layer protocols utilized in conjunction with radio network interface 1040 and core network interface 1050. By way of example and without limitation, core network interface 1050 can comprise the S1 interface and radio network interface 1040 can comprise the Uu interface, as standardized by 3GPP. Program memory 1020 can further comprise software code executed by processor 1010 to control the functions of network node 1000, including configuring and controlling various components such as radio network interface 1040 and core network interface 1050.

Data memory 1030 can comprise memory area for processor 1010 to store variables used in protocols, configuration, control, and other functions of network node 1000. As such, program memory 1020 and data memory 1030 can comprise non-volatile memory (e.g., flash memory, hard disk, *etc.),* volatile memory (e.g., static or dynamic RAM), network-based (e.g., "cloud") storage, or a combination thereof. Persons of ordinary skill in the art will recognize that processor 1010 can include multiple individual processors (not shown), each of which implements a portion of the functionality described above. In such case, multiple individual processors may be commonly connected to program memory 1020 and data memory 1030 or individually connected to multiple individual program memories and/or data memories. More generally, persons of ordinary skill will recognize that various protocols and other functions of network node 1000 may be implemented in many different combinations of hardware and software including, but not limited to, application processors, signal processors, general-purpose processors, multi-core processors, ASICs, fixed digital circuitry, programmable digital circuitry, analog baseband circuitry, radio-frequency circuitry, software, firmware, and middleware.

Radio network interface 1040 can comprise transmitters, receivers, signal processors, ASICs, antennas, beamforming units, and other circuitry that enables network node 1000 to communicate with other equipment such as, in some embodiments, a plurality of compatible user equipment (UE). In some embodiments, interface 1040 can also enable network node 1000 to communicate with compatible satellites of a satellite communication network. In some exemplary embodiments, radio network interface 1040 can comprise various protocols or protocol layers, such as the PHY, MAC, RLC, PDCP, and/or RRC layer protocols standardized by 3GPP for LTE, LTE-A, LTE-LAA, NR, NR-U, etc.; improvements thereto such as described herein above; or any other higher-layer protocols utilized in conjunction with radio network interface 1040. According to further exemplary embodiments of the present disclosure, the radio network interface 1040 can comprise a PHY layer based on OFDM, OFDMA, and/or SC-FDMA technologies. In some embodiments, the functionality of such a PHY layer can be provided cooperatively by radio network interface 1040 and processor 1010 (including program code in memory 1020).

Core network interface 1050 can comprise transmitters, receivers, and other circuitry that enables network node 1000 to communicate with other equipment in a core network such as, in some embodiments, circuit-switched (CS) and/or packet-switched (PS) core networks. In some embodiments, core network interface 1050 can comprise the S1 interface standardized by 3GPP. In some embodiments, core network interface 1050 can comprise the NG interface standardized by 3GPP. In some exemplary embodiments, core network interface 1050 can comprise one or more interfaces to one or more AMFs, SMFs, SGWs, MMEs, SGSNs, GGSNs, and other physical devices that comprise functionality found in GERAN, UTRAN, EPC, 5GC, and CDMA2000 core networks that are known to persons of ordinary skill in the art. In some embodiments, these one or more interfaces may be multiplexed together on a single physical interface. In some embodiments, lower layers of core network interface 1050 can comprise one or more of asynchronous transfer mode (ATM), Internet Protocol (IP)-over-Ethernet, SDH over optical fiber, T1/E1/PDH over a copper wire, microwave radio, or other wired or wireless transmission technologies known to those of ordinary skill in the art.

OA&M interface 1060 can comprise transmitters, receivers, and other circuitry that enables network node 1000 to communicate with external networks, computers, databases, and the like for purposes of operations, administration, and maintenance of network node 1000 or other network equipment operably connected thereto. Lower layers of OA&M interface 1060 can comprise one or more of asynchronous transfer mode (ATM), Internet Protocol (IP)-over-Ethernet, SDH over optical fiber, T1/E1/PDH over a copper wire, microwave radio, or other wired or wireless transmission technologies known to those of ordinary skill in the art. Moreover, in some embodiments, one or more of radio network interface 1040, core network interface 1050, and OA&M interface 1060 may be multiplexed together on a single physical interface, such as the examples listed above.

Figure 11 is a block diagram of an exemplary communication network configured to provide over-the-top (OTT) data services between a host computer and a user equipment (UE), according to one or more exemplary embodiments of the present disclosure. UE 1110 can communicate with radio access network (RAN) 1130 over radio interface 1120, which can be based on protocols described above including, *e*.*g*., LTE, LTE-A, and 5G/NR. For example, UE 1110 can be configured and/or arranged as shown in other figures discussed above.

RAN 1130 can include one or more terrestrial network nodes *(e.g.,* base stations, eNBs, gNBs, controllers, *etc.)* operable in licensed spectrum bands, as well one or more network nodes operable in unlicensed spectrum (using, *e*.*g*., LAA or NR-U technology), such as a 2.4-GHz band and/or a 5-GHz band. In such cases, the network nodes comprising RAN 1130 can cooperatively operate using licensed and unlicensed spectrum. In some embodiments, RAN 1130 can include, or be capable of communication with, one or more satellites comprising a satellite access network. In various embodiments, RAN 1130 can be an E-UTRAN (*e*.*g*., as illustrated in Figure 1) or an NG-RAN (*e*.*g*., as illustrated in Figure 8).

RAN 1130 can further communicate with core network 1140 according to various protocols and interfaces described above. For example, one or more apparatus (*e*.*g*., base stations, eNBs, gNBs, *etc*.) comprising RAN 1130 can communicate to core network 1140 via core network interface 1150 described above. In some exemplary embodiments, RAN 1130 and core network 1140 can be configured and/or arranged as shown in other figures discussed above. For example, eNBs comprising an E-UTRAN 1130 can communicate with an EPC 1140 via an S1 interface. As another example, gNBs comprising an NG-RAN 1130 can communicate with a 5GC 1130 via an NG interface.

Core network 1140 can further communicate with an external packet data network, illustrated in Figure 11 as Internet 1150, according to various protocols and interfaces known to persons of ordinary skill in the art. Many other devices and/or networks can also connect to and communicate via Internet 1150, such as exemplary host computer 1160. In some exemplary embodiments, host computer 1160 can communicate with UE 1110 using Internet 1150, core network 1140, and RAN 1130 as intermediaries. Host computer 1160 can be a server (*e*.*g*., an application server) under ownership and/or control of a service provider. Host computer 1160 can be operated by the OTT service provider or by another entity on the service provider's behalf.

For example, host computer 1160 can provide an over-the-top (OTT) packet data service to UE 1110 using facilities of core network 1140 and RAN 1130, which can be unaware of the routing of an outgoing/incoming communication to/from host computer 1160. Similarly, host computer 1160 can be unaware of routing of a transmission from the host computer to the UE, *e.g.,* the routing of the transmission through RAN 1130. Various OTT services can be provided using the exemplary configuration shown in Figure 11 including, e.g., streaming (unidirectional) audio and/or video from host computer to UE, interactive (bidirectional) audio and/or video between host computer and UE, interactive messaging or social communication, interactive virtual or augmented reality, *etc.*

The exemplary network shown in Figure 11 can also include measurement procedures and/or sensors that monitor network performance metrics including data rate, latency and other factors that are improved by exemplary embodiments disclosed herein. The exemplary network can also include functionality for reconfiguring the link between the endpoints (*e*.*g*., host computer and UE) in response to variations in the measurement results. Such procedures and functionalities are known and practiced; if the network hides or abstracts the radio interface from the OTT service provider, measurements can be facilitated by proprietary signaling between the UE and the host computer.

The exemplary embodiments described herein provide techniques for improving the transmission efficiency and/or power consumption for UE UL transmissions using preconfigured uplink resources (PUR), such as by facilitating UE retransmissions of UL data messages, originally sent via PUR, that were incorrectly received (or not received at all) by a network node. By facilitating retransmissions by UEs configured with PUR, such techniques can reduce lost UL data messages (*e*.*g*., lost packets) and/or reduce UE energy consumption. When used in LTE or NR UEs *(e.g.,* UE 1110) and eNBs or gNBs *(e.g.,* gNBs comprising RAN 1130), exemplary embodiments described herein can provide various improvements, benefits, and/or advantages to OTT service providers and end-users, including more consistent data throughout and fewer delays without excessive UE power consumption or other reductions in user experience.

The foregoing merely illustrates the principles of the disclosure. Various modifications and alterations to the described embodiments will be apparent to those skilled in the art in view of the teachings herein. It will thus be appreciated that those skilled in the art will be able to devise numerous systems, arrangements, and procedures that, although not explicitly shown or described herein, embody the principles of the disclosure and can be thus within the scope of the disclosure. Various exemplary embodiments can be used together with one another, as well as interchangeably therewith, as should be understood by those having ordinary skill in the art.

The term unit, as used herein, can have conventional meaning in the field of electronics, electrical devices and/or electronic devices and can include, for example, electrical and/or electronic circuitry, devices, modules, processors, memories, logic solid state and/or discrete devices, computer programs or instructions for carrying out respective tasks, procedures, computations, outputs, and/or displaying functions, and so on, as such as those that are described herein.

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include Digital Signal Processor (DSPs), special-purpose digital logic, and the like. The processing circuitry may be configured to execute program code stored in memory, which may include one or several types of memory such as Read Only Memory (ROM), Random Access Memory (RAM), cache memory, flash memory devices, optical storage devices, *etc.* Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according one or more embodiments of the present disclosure.

As described herein, device and/or apparatus can be represented by a semiconductor chip, a chipset, or a (hardware) module comprising such chip or chipset; this, however, does not exclude the possibility that a functionality of a device or apparatus, instead of being hardware implemented, be implemented as a software module such as a computer program or a computer program product comprising executable software code portions for execution or being run on a processor. Furthermore, functionality of a device or apparatus can be implemented by any combination of hardware and software. A device or apparatus can also be regarded as an assembly of multiple devices and/or apparatuses, whether functionally in cooperation with or independently of each other. Moreover, devices and apparatuses can be implemented in a distributed fashion throughout a system, so long as the functionality of the device or apparatus is preserved. Such and similar principles are considered as known to a skilled person.

Unless otherwise defined, all terms (including technical and scientific terms) used herein have the same meaning as commonly understood by one of ordinary skill in the art to which this disclosure belongs. It will be further understood that terms used herein should be interpreted as having a meaning that is consistent with their meaning in the context of this specification and the relevant art and will not be interpreted in an idealized or overly formal sense unless expressly so defined herein.

In addition, certain terms used in the present disclosure, including the specification, drawings and exemplary embodiments thereof, can be used synonymously in certain instances, including, but not limited to, *e.g.,* data and information. It should be understood that, while these words and/or other words that can be synonymous to one another, can be used synonymously herein, that there can be instances when such words can be intended to not be used synonymously.

## Claims

1. A method for transmitting uplink, UL, data, by a Narrowband IoT, NB-IoT, user equipment, UE, using preconfigured uplink resources, PUR, in a radio access network, RAN, the method comprising:
receiving (710), from a network node in the RAN, a first PUR configuration;
transmitting (720), based on the first PUR configuration, a first UL data message to the network node;
receiving (730), from the network node, a first acknowledgement, PUR ACK, of the first UL data message, wherein the first PUR ACK:
indicates whether the first UL data message was correctly or incorrectly received by the network node, and
includes information related to subsequent UL transmissions using PUR, the information includes a second PUR configuration; and
transmitting (740) a second UL data message, to the network node, based on the second PUR configuration,
wherein both the first PUR configuration and second PUR configurations are contention-based shared, CBS, PUR configurations, and the second PUR configuration identifies:
a first portion of one or more transmission time windows that is available for initial transmission of UL data messages; and
a second portion of the one or more transmission time windows that is reserved for re-transmissions of UL data messages.

2. The method of claim 1, wherein the information related to subsequent UL transmissions using PUR includes at least one of the following:
timing advance for uplink timing alignment;
transmission resource allocation;
number of repetitions of an UL data message;
power control command;
redundancy version of an UL data message;
modulation and coding scheme for an UL data message; and
transport block size for an UL data message.

3. The method of any of claims 1-2, wherein transmitting (740) the second UL data message comprises transmitting (741) the second UL data message according to a fallback procedure if the first PUR ACK indicates that the first UL data message was incorrectly received by the network node.

4. The method of any of claims 1-2, further comprising transmitting (750) a third UL data message according to a fallback procedure if a second PUR ACK is not received within a predetermined time after transmitting the second UL data message.

5. The method of any of claims 3-4, wherein the information related to subsequent UL transmissions includes an indication that the UE should use the fallback procedure for transmitting one or more subsequent UL data messages.

6. The method of any of claims 3-5, wherein:
a first value of a transmission parameter is used when transmitting (720) the first UL data message; and
a second value of the transmission parameter is used when transmitting (741, 750) a subsequent UL data message according to the fallback procedure.

7. The method of claim 6, wherein:
transmitting the first UL data message comprises determining (721) the first value of the transmission parameter based on one or more first criteria; and
transmitting (741, 750) the subsequent UL data message according to the fallback procedure comprises determining the second value of the transmission parameter based on one or more second criteria.

8. The method of claim 7, wherein the second criteria are based on the first criteria and respective predetermined offsets.

9. The method of claim 7, wherein the second criteria include one or more criteria not included in the first criteria.

10. A method, performed by a network node, for receiving uplink, UL, data transmitted by one or more Narrowband IoT, NB-IoT, user equipment, UEs, using preconfigured uplink resources, PUR, in a radio access network, RAN, the method comprising:
transmitting (810), to a UE, a first PUR configuration;
receiving (820), based on the first PUR configuration, a first UL data message from the UE;
transmitting (830), to the UE, a first acknowledgement, PUR ACK, of the first UL data message, wherein the first PUR ACK:
indicates whether the first UL data message was correctly or incorrectly received by the network node, and
includes information related to subsequent UL transmissions using PUR, the information includes a second PUR configuration; and
receiving (840) a second UL data message, from the UE, based on the second PUR configuration,
wherein both the first PUR configuration and second PUR configurations are contention-based shared, CBS, PUR configurations, and the second PUR configuration identifies:
a first portion of one or more transmission time windows that is available for initial transmission of UL data messages; and
a second portion of the one or more transmission time windows that is reserved for re-transmissions of UL data messages.

11. The method of claim 10, wherein:
the first PUR ACK indicates that the first UL data message was incorrectly received by the network node; and
the information related to subsequent UL transmissions includes one of the following:
an indication of a fallback procedure for the UE; or
an allocation of dedicated resources for retransmission of the first UL data message.

12. A user equipment, UE (120, 900) configured to transmit uplink, UL, data using preconfigured uplink resources, PUR, in a radio access network, RAN (100, 699), the UE being further arranged to perform operations corresponding to any of the methods of claims 1-9.

13. A computer-program product (921) comprising computer-executable instructions that, when executed by processing circuitry (910) of a user equipment, UE (120, 900), configure the UE to perform operations corresponding to any of the methods of claims 1-9.

14. A network node (105-115, 610-620, 1000), of a radio access network, RAN (100, 699), configured to receive uplink, UL, data transmitted by one or more user equipment, UEs, using preconfigured uplink resources, PUR, the network node being further arranged to perform operations corresponding to any of the methods of claims 10-11.

15. A computer-program product (1021) comprising computer-executable instructions that, when executed by processing circuitry (1010) of a network node (105-115, 610-620, 1000), configure the network node to perform operations corresponding to any of the methods of claims 10-11.

## Patentansprüche

1. Verfahren zum Übertragen von Uplink-Daten, UL-Daten, durch eine Benutzereinrichtung, UE, mit Schmalband-IOT, NB-loT, unter Verwendung vorkonfigurierter Uplink-Ressourcen, PUR, in einem Funkzugangsnetz, RAN, das Verfahren umfassend:
Empfangen (710), von einem Netzknoten in dem RAN, einer ersten PUR-Konfiguration;
Übertragen (720), basierend auf der ersten PUR-Konfiguration, einer ersten UE-Datennachricht an den Netzknoten;
Empfangen (730), von dem Netzknoten, einer ersten Bestätigung, PUR ACK, der ersten UL-Datennachricht, wobei die erste PUR ACK:
angibt, ob die erste UL-Datennachricht durch den Netzknoten korrekt oder falsch empfangen wurde, und
Informationen einschließt, die sich auf nachfolgende UL-Übertragungen unter Verwendung von PUR beziehen, wobei die Informationen eine zweite PUR-Konfiguration einschließen; und
Übertragen (740) einer zweiten UL-Datennachricht an den Netzknoten basierend auf der zweiten PUR-Konfiguration,
wobei sowohl die erste PUR-Konfiguration als auch die zweite PUR-Konfiguration konkurrenzbasierte gemeinsam genutzte, CBS, PUR-Konfigurationen sind und die zweite PUR-Konfiguration identifiziert:
einen ersten Abschnitt eines oder mehrerer Übertragungszeitfenster, der für eine anfängliche Übertragung von UL-Datennachrichten verfügbar ist; und
einen zweiten Abschnitt des einen oder der mehreren Übertragungszeitfenster, der für erneute Übertragungen von UL-Datennachrichten reserviert ist.

2. Verfahren nach Anspruch 1, wobei die Informationen, die sich auf nachfolgende UL-Übertragungen unter Verwendung von PUR beziehen, mindestens eines der Folgenden einschließen:
Zeitsteuerungsvorlauf für eine Uplink-Zeitausrichtung;
Übertragungsressourcenzuweisung;
Anzahl Wiederholungen einer UL-Datennachricht;
Leistungsregelungsbefehl;
Redundanzversion einer UL-Datennachricht;
Modulations- und Codierungsschema für eine UL-Datennachricht; und
Transportblockgröße für eine UL-Datennachricht.

3. Verfahren nach einem der Ansprüche 1 bis 2, wobei das Übertragen (740) der zweiten UL-Datennachricht das Übertragen (741) der zweiten UL-Datennachricht gemäß einer Fallback-Vorgehensweise umfasst, wenn die erste PUR ACK angibt, dass die erste UL-Datennachricht durch den Netzknoten falsch empfangen wurde.

4. Verfahren nach einem der Ansprüche 1 bis 2, ferner umfassend das Übertragen (750) einer dritten UL-Datennachricht gemäß einer Fallback-Vorgehensweise, wenn eine zweite PUR ACK nicht innerhalb einer zuvor bestimmten Zeit nach dem Übertragen der zweiten UL-Datennachricht empfangen wird.

5. Verfahren nach einem der Ansprüche 3 bis 4, wobei die Informationen, die sich auf nachfolgende UL-Übertragungen beziehen, eine Angabe einschließen, dass die UE die Fallback-Vorgehensweise zum Übertragen einer oder mehrerer nachfolgender UL-Datennachrichten verwenden sollte.

6. Verfahren nach einem der Ansprüche 3 bis 5, wobei:
ein erster Wert eines Übertragungsparameters verwendet wird, wenn die erste UL-Datennachricht übertragen (720) wird; und
ein zweiter Wert des Übertragungsparameters verwendet wird, wenn eine nachfolgende UL-Datennachricht gemäß der Fallback-Vorgehensweise übertragen wird (741, 750).

7. Verfahren nach Anspruch 6, wobei:
das Übertragen der ersten UL-Datennachricht ein Bestimmen (721) des ersten Werts des Übertragungsparameters basierend auf einem oder mehreren ersten Kriterien umfasst; und
das Übertragen (741, 750) der nachfolgenden UL-Datennachricht gemäß der Fallback-Vorgehensweise das Bestimmen des zweiten Werts des Übertragungsparameters basierend auf einem oder mehreren zweiten Kriterien umfasst.

8. Verfahren nach Anspruch 7, wobei die zweiten Kriterien auf den ersten Kriterien und jeweiligen zuvor bestimmten Versätzen basieren.

9. Verfahren nach Anspruch 7, wobei die zweiten Kriterien ein oder mehrere Kriterien einschließt, die nicht in den ersten Kriterien eingeschlossen sind.

10. Verfahren, das durch einen Netzknoten durchgeführt wird, zum Empfangen von Uplink-Daten, UL-Daten, die durch eine oder mehrere Benutzereinrichtungen, UEs, mit Schmalband-loT, NB-loT, unter Verwendung vorkonfigurierter Uplink-Ressourcen, PUR, in einem Funkzugangsnetz, RAN, übertragen werden, das Verfahren umfassend:
Übertragen (810), an eine UE, einer ersten PUR-Konfiguration;
Empfangen (820), basierend auf der ersten PUR-Konfiguration, einer ersten UE-Datennachricht von der UE;
Übertragen (830), an die UE, einer ersten Bestätigung, PUR ACK, der ersten
UL-Datennachricht, wobei die erste PUR ACK:
angibt, ob die erste UL-Datennachricht durch den Netzknoten korrekt oder falsch empfangen wurde, und
Informationen einschließt, die sich auf nachfolgende UL-Übertragungen unter Verwendung von PUR beziehen, wobei die Informationen eine zweite PUR-Konfiguration einschließen; und
Empfangen (840) einer zweiten UL-Datennachricht, von der UE, basierend auf der zweiten PUR-Konfiguration,
wobei sowohl die erste PUR-Konfiguration als auch die zweite PUR-Konfiguration konkurrenzbasierte gemeinsam genutzte, CBS, PUR-Konfigurationen sind und die zweite PUR-Konfiguration identifiziert:
einen ersten Abschnitt eines oder mehrerer Übertragungszeitfenster, der für die anfängliche Übertragung von UL-Datennachrichten verfügbar ist; und
einen zweiten Abschnitt des einen oder der mehreren Übertragungszeitfenster, der für erneute Übertragungen von UL-Datennachrichten reserviert ist.

11. Verfahren nach Anspruch 10, wobei:
die erste PUR ACK angibt, dass die erste UL-Datennachricht durch den Netzknoten falsch empfangen wurde; und
die Informationen, die sich auf nachfolgende UL-Übertragungen beziehen, eines der Folgenden einschließen:
einer Angabe einer Fallback-Vorgehensweise für die UE; oder
einer Zuweisung von dedizierten Ressourcen für die erneute Übertragung der ersten UL-Datennachricht.

12. Benutzereinrichtung, UE (120, 900), die konfiguriert ist, um Uplink-Daten, UL-Daten, unter Verwendung vorkonfigurierter Uplink-Ressourcen, PUR, in einem Funkzugangsnetz, RAN, (100, 699) zu übertragen, wobei die UE ferner angeordnet ist, um Abläufe durchzuführen, die einem der Verfahren nach den Ansprüchen 1 bis 9 entsprechen.

13. Computerprogrammprodukt (921), umfassend computerausführbare Anweisungen, die, wenn sie durch eine Verarbeitungsschaltung (910) einer Benutzereinrichtung, UE, (120, 900) ausgeführt werden, die UE konfigurieren, um Abläufe durchzuführen, die einem der Verfahren nach den Ansprüchen 1 bis 9 entsprechen.

14. Netzknoten (105-115, 610-620, 1000), eines Funkzugangsnetzes, RAN, (100, 699), der konfiguriert ist, um Uplink-Daten, UL-Daten, zu empfangen, die durch eine oder mehrere Benutzereinrichtungen, UEs, unter Verwendung vorkonfigurierter Uplink-Ressourcen, PUR, übertragen werden, wobei der Netzknoten ferner angeordnet ist, um Abläufe durchzuführen, die einem der Verfahren nach den Ansprüchen 10 bis 11 entsprechen.

15. Computerprogrammprodukt (1021), umfassend computerausführbare Anweisungen, die, wenn sie durch die Verarbeitungsschaltung (1010) eines Netzknotens (105-115, 610-620, 1000) ausgeführt werden, den Netzknoten konfigurieren, um Abläufe durchzuführen, die einem der Verfahren nach den Ansprüchen 10 bis 11 entsprechen.

## Revendications

1. Procédé de transmission de données de liaison montante, UL, par un équipement utilisateur, UE, de l'IdO à bande étroite, NB-loT, à l'aide de de ressources de liaison montante préconfigurées, PUR, dans un réseau d'accès radio, RAN, le procédé comprenant :
la réception (710), depuis un noeud de réseau dans le RAN, d'une première configuration de PUR ;
la transmission (720), sur la base de la première configuration de PUR, d'un premier message de données d'UE au noeud de réseau ;
la réception (730), depuis le noeud de réseau, d'un premier accusé de réception, PUR ACK, du premier message de données UL, dans lequel le premier PUR ACK :
indique si le premier message de données UL a été correctement ou incorrectement reçu par le noeud de réseau, et
comporte des informations relatives aux transmissions UL ultérieures à l'aide de PUR, les informations comportant une seconde configuration PUR ; et
la transmission (740) d'un deuxième message de données UL, au noeud de réseau, sur la base de la seconde configuration PUR,
dans lequel la première configuration PUR et la seconde configuration PUR sont toutes les deux des configurations PUR partagées, CBS, basées sur la contention, et la seconde configuration PUR identifie :
une première partie d'une ou plusieurs fenêtres temporelles de transmission qui sont disponibles pour la transmission initiale de messages de données UL ; et
une seconde partie de la ou des fenêtres de temps de transmission qui est réservée aux retransmissions de messages de données UL.

2. Procédé selon la revendication 1, dans lequel les informations se rapportant à des transmissions UL ultérieures à l'aide de PUR comportent au moins l'un des éléments suivants :
une avance temporelle pour un alignement de synchronisation de liaison montante ;
une allocation de ressources de transmission ;
un nombre de répétitions d'un message de données UL ;
une commande de contrôle de puissance ;
une version de redondance d'un message de données UL ;
un schéma de modulation et de codage pour un message de données UL ; et
une taille de bloc de transport pour un message de données UL.

3. Procédé selon l'une quelconque des revendications 1 et 2, dans lequel la transmission (740) du deuxième message de données UL comprend la transmission (741) du deuxième message de données UL selon une procédure de repli si le premier PUR ACK indique que le premier message de données UL a été incorrectement reçu par le noeud de réseau.

4. Procédé selon l'une quelconque des revendications 1 à 2, comprenant en outre la transmission (750) d'un troisième message de données UL selon une procédure de repli si un second PUR ACK n'est pas reçu dans un temps prédéterminé après transmission du deuxième message de données UL.

5. Procédé selon l'une quelconque des revendications 3 à 4, dans lequel les informations se rapportant à des transmissions UL ultérieures comportent une indication que l'UE doit utiliser la procédure de repli pour transmettre un ou plusieurs messages de données UL ultérieurs.

6. Procédé selon l'une quelconque des revendications 3 à 5, dans lequel :
une première valeur d'un paramètre de transmission est utilisée lors de la transmission (720) du premier message de données UL ; et
une seconde valeur du paramètre de transmission est utilisée lors de la transmission (741, 750) d'un message de données UL ultérieur selon la procédure de repli.

7. Procédé selon la revendication 6, dans lequel :
la transmission du premier message de données UL comprend la détermination (721) de la première valeur du paramètre de transmission sur la base d'un ou de plusieurs premiers critères ; et
la transmission (741, 750) du message de données UL ultérieur selon la procédure de repli consiste à déterminer la seconde valeur du paramètre de transmission sur la base d'un ou de plusieurs seconds critères.

8. Procédé selon la revendication 7, dans lequel les seconds critères sont basés sur les premiers critères et les décalages prédéterminés respectifs.

9. Procédé selon la revendication 7, dans lequel les seconds critères comportent un ou plusieurs critères non inclus dans les premiers critères.

10. Procédé, effectué par un noeud de réseau, pour recevoir des données de liaison montante, UL, transmises par un ou plusieurs équipements d'utilisateur, UE, de l'IdO à bande étroite, NB-loT, à l'aide de ressources de liaison montante préconfigurées, PUR, dans un réseau d'accès radio, RAN, le procédé comprenant :
la transmission (810), à un UE, d'une première configuration PUR ;
la réception (820), sur la base de la première configuration de PUR, d'un premier message de données d'UE provenant de l'UE ;
la transmission (830), à l'UE, d'un premier accusé de réception, PUR ACK, du premier message de données UL, dans lequel le premier PUR ACK :
indique si le premier message de données UL a été correctement ou incorrectement reçu par le noeud de réseau, et
comporte des informations relatives aux transmissions UL ultérieures à l'aide de PUR, les informations comportent une seconde configuration PUR ; et
la réception (840) d'un deuxième message de données UL, en provenance de l'UE, sur la base de la seconde configuration PUR,
dans lequel la première configuration PUR et la seconde configuration PUR sont toutes deux des configurations CBS partagées basées sur les configurations PUR partagées,
basées sur la contention, et la seconde configuration PUR identifient :
une première partie d'une ou de plusieurs fenêtres temporelles de transmission qui sont disponibles pour la transmission initiale de messages de données UL ; et
une seconde partie de la ou des fenêtres de temps de transmission qui est réservée aux retransmissions de messages de données UL.

11. Procédé selon la revendication 10, dans lequel :
le premier PUR ACK indique que le premier message de données UL a été correctement reçu par le noeud de réseau ; et
les informations liées aux transmissions UL ultérieures comportent l'une des informations suivantes :
une indication d'une procédure de repli pour l'UE ; ou
une allocation de ressources dédiées pour la retransmission du premier message de données UL.

12. Équipement utilisateur, UE (120, 900) configuré pour transmettre des données de liaison montante, UL, à l'aide de ressources de liaison montante préconfigurées, PUR, dans un réseau d'accès radio, RAN (100, 699), l'UE étant en outre agencé pour effectuer des opérations correspondant à l'un quelconque des procédés selon les revendications 1 à 9.

13. Produit de programme informatique (921) comprenant des instructions exécutables par ordinateur qui, lorsqu'elles sont exécutées par le circuit de traitement (910) d'un équipement d'utilisateur, UE (120, 900),
configurent l'UE pour effectuer des opérations correspondant à l'un quelconque selon les procédés des revendications 1 à 9.

14. Noeud de réseau (105-115, 610-620, 1000), d'un réseau d'accès radio, RAN (100, 699), configuré pour recevoir des données de liaison montante, UL, transmises par un ou plusieurs équipements d'utilisateur, UE, à l'aide de ressources de liaison montante préconfigurées, PUR, le noeud de réseau étant en outre agencé pour effectuer des opérations correspondant à l'un quelconque des procédés selon les revendications 10 à 11.

15. Produit de programme informatique (1021) comprenant des instructions exécutables par ordinateur qui, lorsqu'elles sont exécutées par le circuit de traitement (1010) d'un noeud de réseau (105-115, 610-620, 1000), configurent le noeud de réseau pour qu'il effectue des opérations correspondant à l'un quelconque des procédés selon les revendications 10 à 11.
